(19) Europäisches Patentamt
European Patent Office
Office européen des brevets

(11) **EP 3 066 813 B1**

(12) **EUROPEAN PATENT SPECIFICATION**

(45) Date of publication and mention of the grant of the patent:
**20.12.2017 Bulletin 2017/51**

(21) Application number: **14803294.9**

(22) Date of filing: **06.11.2014**

(51) Int Cl.:
***H04L 29/06*** *(2006.01)* ***H04W 28/06*** *(2009.01)*

(86) International application number:
**PCT/US2014/064321**

(87) International publication number:
**WO 2015/069875 (14.05.2015 Gazette 2015/19)**

(54) **APPARATUS AND METHODS FOR MAC HEADER COMPRESSION**

VORRICHTUNG UND VERFAHREN ZUR MAC-KOPFTEILKOMPRIMIERUNG

APPAREIL ET PROCÉDÉS DE COMPRESSION D’EN-TÊTE DE CONTRÔLE D’ACCÈS AU SUPPORT (MAC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2013 US 201361900988 P**
**07.11.2013 US 201361901412 P**
**05.11.2014 US 201414534053**

(43) Date of publication of application:
**14.09.2016 Bulletin 2016/37**

(73) Proprietor: **Qualcomm Incorporated**
**San Diego, CA 92121-1714 (US)**

(72) Inventors:
- **ASTERJADHI, Alfred**
  **San Diego, California 92121-1714 (US)**
- **WENTINK, Maarten Menzo**
  **San Diego, California 92121-1714 (US)**
- **MERLIN, Simone**
  **San Diego, California 92121-1714 (US)**

(74) Representative: **Emde, Eric**
**Wagner & Geyer**
**Gewürzmühlstrasse 5**
**80538 München (DE)**

(56) References cited:
**WO-A1-2013/097654** **WO-A2-2007/021764**
**WO-A2-2012/159082** **US-A1- 2006 291 461**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 066 813 B1

## Description

## BACKGROUND

### Field

The present application relates generally to wireless communications, and more specifically to systems, methods, and devices for compressing medium access control (MAC) headers for communication.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/routing technique used to interconnect the various network nodes and devices (e.g. circuit switching vs. packet switching), the type of physical media employed for transmission (e.g. wired vs. wireless), and the set of communication protocols used (e.g. Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

The devices in a wireless network may transmit/receive information between each other. The information may comprise packets, which in some aspects may be referred to as data units or data frames. The packets may include overhead information (e.g., header information, packet properties, etc.) that helps in routing the packet through the network, identifying the data in the packet, processing the packet, etc., as well as data, for example user data, multimedia content, etc. as might be carried in a payload of the packet.

Accordingly, the header information is transmitted with packets. Such header information may comprise a large portion of a data packet. Accordingly, transmission of data in such packets may be inefficient due to the fact that much of the bandwidth for transmitting data may be used to transmit header information as opposed to the actual data. Thus, improved systems, methods, and devices for communicating packets are desired.

Prior art document WO 2013/097654 discloses a mechanism of negotiation based on a MAC compression request message. The compression request message includes a flow identification field and MAC header field information with a combination of one or more of address fields, QoS control field and HT control field. The presence of these fields in the compression request message is meant as an instruction to store their values (for supporting later compression) by the receiver.

## SUMMARY

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include decreasing the size of a frame header (e.g., medium access control (MAC) header) of a data packet, thereby reducing the overhead in transmitting payloads in data packets.

## BRIEF DESCRIPTION OF THE DRAWINGS

FIG. 1 illustrates an example of a wireless communication system in which aspects of the present disclosure may be employed.
FIG. 2 illustrates various components, including a receiver, that may be utilized in a wireless device that may be employed within the wireless communication system of FIG. 1.
FIG. 3 illustrates an example of a medium access control (MAC) header.
FIG. 3A illustrates an example of contents of a medium access control (MAC) header.

FIG. 3B illustrates an example of contents of a frame control field of a medium access control (MAC) header.

FIG. 4 illustrates an example of a compressed MAC header.

FIG. 4A illustrates examples of the type of data in the fields of the compressed MAC header of FIG. 4 for a data packet, and the data for a corresponding acknowledgement according to one aspect of the MAC header of FIG. 4.

FIG. 5 illustrates a cryptographic nonce 500 that can be used in wireless communication according to a first protocol version.

FIG. 6 illustrates a cryptographic nonce 600 that can be used in wireless communication according to a second protocol version.

FIG. 7 shows a flowchart 700 for an exemplary method of wireless communication that can be employed within the wireless communication system 100 of FIG. 1.

FIG. 8 illustrates a short media access control header 800.

FIG. 9A illustrates an example of a frame control field 805a of a compressed MAC header.

FIG. 9B illustrates an example of a short ID (S-ID) field 950 of a compressed MAC header.

FIG. 10A illustrates a dynamic A-MPDU frame. 1000.

FIG. 10B illustrates an example format of an A-MSDU sub-frame.

FIG. 10C illustrates an example format of a sub-frame control field.

FIG. 11 shows an example of at least a portion of a header compression request or response message including a header compression information element (IE).

FIG. 12 shows an example of a header compression control field 1115.

FIG. 13 shows an example of at least a portion of a header compression request or response message including a header compression information element (IE) 1300.

FIG. 14 shows an example of a header compression control field 1315.

FIG. 15 shows another example of at least a portion of a header compression request or response message including a header compression information element (IE).

FIG. 16 shows an example of a header compression control field 1515.

FIG. 16A shows another example of at least a portion of a header compression request or response message including a header compression information element (IE).

FIG. 16B shows an example of a header compression control field.

FIG. 16C shows an example of a CCMP update field.

FIG. 17A is a flowchart of a method for wireless communication utilizing compressed headers.

FIG. 17B is a functional block diagram of an exemplary wireless device 1750 that may be employed within the wireless communication system 100.

FIG. 18A is a flowchart of a method for wireless communication utilizing compressed headers.

FIG. 18B is a functional block diagram of an exemplary wireless device 1850 that may be employed within the wireless communication system 100.

## DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims.

Popular wireless network technologies may include various types of wireless local area networks (WLANs). A WLAN may be used to interconnect nearby devices together, employing widely used networking protocols. The various aspects described herein may apply to any communication standard, such as Wi-Fi or, more generally, any member of the IEEE 802.11 family of wireless protocols. For example, the various aspects described herein may be used as part of the IEEE 802.11ah protocol, which uses sub-1GHz bands.

In some aspects, wireless signals in a sub-gigahertz band may be transmitted according to the 802.11ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and an STA serves as a user of the WLAN. For example, an STA may be a laptop computer, a personal digital assistant (PDA), a mobile phone, etc. In an example, an STA connects to an AP via a Wi-Fi (e.g., IEEE 802.11 protocol such as 802.11ah) compliant wireless link to obtain general connectivity to the Internet or to other wide area networks. In some implementations an STA may also be used as an AP. In some implementations an STA may also be used as an AP. A STA or an AP may be referred to as a node or a wireless node in a wireless communications network. A STA or an AP may be referred to as a wireless device or an access terminal in a wireless communications network.

In some aspects, the node is a wireless node. Such wireless node may provide, for example, connectivity for or to a network (e.g., a wide area network such as the Internet or a cellular network) via a wired or wireless communication link. The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement the 802.11ah standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

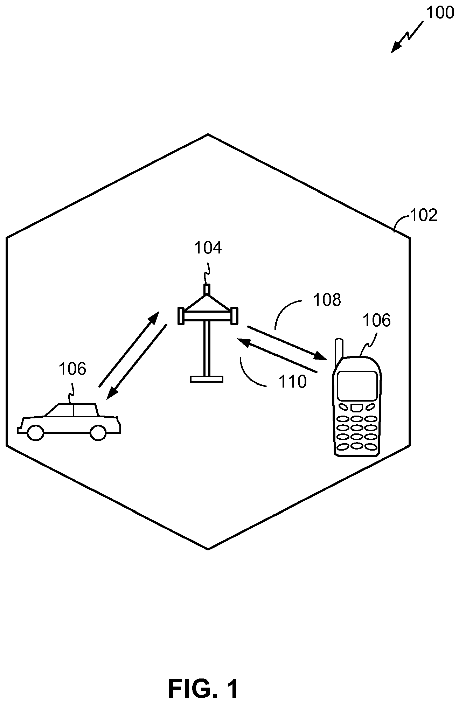

FIG. 1 illustrates an example of a wireless communication system 100 in which aspects of the present disclosure may be employed. The wireless communication system 100 may operate pursuant to a wireless standard, for example the 802.11ah standard. The wireless communication system 100 may include an AP 104, which communicates with STAs 106.

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel. Further, in some aspects, STAs 106 may communicate directly with each other and form a direct link (direct) between each other.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network between the STAs 106. In another example, the functions of the AP 104 described herein may alternatively be performed by one or more of the STAs 106.

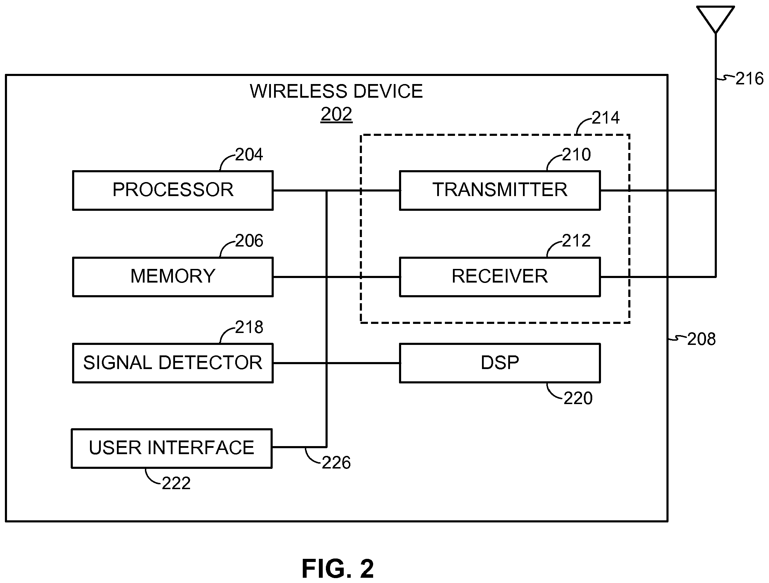

FIG. 2 illustrates various components that may be utilized in a wireless device 202 that may be employed within the wireless communication system 100. The wireless device 202 is an example of a device that may be configured to implement the various methods described herein. For example, the wireless device 202 may comprise the AP 104 or one of the STAs 106.

The wireless device 202 may include a processor 204 which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

When the wireless device 202 is implemented or used as a transmitting node, the processor 204 may be configured to select one of a plurality of medium access control (MAC) header types, and to generate a packet having that MAC header type. For example, the processor 204 may be configured to generate a packet comprising a MAC header and a payload and to determine what type of MAC header to use, as discussed in further detail below.

When the wireless device 202 is implemented or used as a receiving node, the processor 204 may be configured to process packets of a plurality of different MAC header types. For example, the processor 204 may be configured to determine the type of MAC header used in a packet and process the packet and/or fields of the MAC header accordingly as further discussed below.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and/or a receiver 212 to allow transmission and reception of data between the wireless device 202 and a remote location. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The transmitter 210 may be configured to wirelessly transmit packets having different MAC header types. For example, the transmitter 210 may be configured to transmit packets with different types of headers generated by the processor 204, discussed above.

The receiver 212 may be configured to wirelessly receive packets having different MAC header type. In some aspects, the receiver 212 is configured to detect a type of a MAC header used and process the packet accordingly, as discussed in further detail below.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a packet for transmission. In some aspects, the packet may comprise a physical layer data unit (PPDU).

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user.

The various components of the wireless device 202 may be coupled together by a bus system 226. The bus system 226 may include a data bus, for example, as well as a power bus, a control signal bus, and a status signal bus in addition to the data bus. Those of skill in the art will appreciate the components of the wireless device 202 may be coupled together or accept or provide inputs to each other using some other mechanism.

The various components of the wireless device 202 may individually or in combination with one or more other components provide a communications interface. One or more communications interfaces of the device 202 may be configured to receive or transmit a message, such as a request or a reply message, by other components of the wireless device 202, such as the processor 204, transmitter 210, receiver 212, or the DSP 220. For example, the processor 204 may provide an interface by being operatively coupled to one or more signal lines for providing electrical signals to one or more other components of the wireless device 202, or the signal lines may be configured to provide electrical signals to components external to the wireless device 202. In some aspects, the transmitter 210 may comprise an interface by transmitting radio signals over the antenna 216. Similarly the receiver 212 may receive data over an interface by receiving electrical signals from the antenna 216.

Although a number of separate components are illustrated in FIG. 2, those of skill in the art will recognize that one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements.

For ease of reference, when the wireless device 202 is configured as a transmitting node, it is hereinafter referred to as a wireless device 202t. Similarly, when the wireless device 202 is configured as a receiving node, it is hereinafter referred to as a wireless device 202r. A device in the wireless communication system 100 may implement only functionality of a transmitting node, only functionality of a receiving node, or functionality of both a transmitting node and a receive node.

As discussed above, the wireless device 202 may comprise an AP 104 or a STA 106, or a relay device, and may be used to transmit and/or receive communications having a plurality of MAC header types. The wireless device 202 may be referred to herein as a node. Relay devices as implemented by the device 202 may include functionality of both an access point and a station.

In some aspects disclosed herein, the wireless device 202t may request that the wireless device 202r store information (e.g., values for fields of the MAC header). For example, the wireless device 202t may transmit a header compression request to the device 202r. The wireless device 202r may then respond to the request, indicating whether the information is stored. The wireless device 202t may then omit such fields from the header in packets sent to the wireless device 202r.

In some aspects, the wireless device 202t may update the information stored at the device 202r. The update may be accomplished by transmitting a frame including a header that includes the updated information. Upon receiving the header with the updated information, the device 202r may determine that the updated information corresponds to information stored previously based on the header compression request. In response to this determination, the device 202r may replace or augment the previously stored information with the updated information provided in the received header. The device 202t may then transmit another header that does not include the information. Upon receiving this header, the device 202r may insert or otherwise utilize the updated stored information as a replacement for any information not included in the recently received header.

In some aspects, the header compression request may request that the device 202r store one or more of an A3 field, A4 field, source address field of a MSDU, or a destination address field of a MSDU of a media access control header be stored.

Further, in certain aspects, headers may have different fields when security is enabled for the data packet. For example, the packet may have a counter mode with cipher block chaining message authentication code protocol (CCMP) header when security is enabled. The CCMP header may be part of the MAC header. Normally, the CCMP header includes several packet numbers (PNs) (e.g., PN0, PN1, PN2, PN3, PN4, and PN5). The values of PN2, PN3, PN4, and PN5 may not change often. In some aspects, PN0 and PN1 may be derived based on the sequence control field.

A media access header compression request message transmitted by the device 202t to the device 202r may request the device 202r to store the PN2, PN3, PN4, and PN5. If the device 202r responds to the request with an indication that the base PN2-PN5 will be stored, subsequent media access control headers that include a CCMP header may not include the PN2, PN3, PN4, and PN5, but only the PN0 and PN1 fields. Alternatively, the PN0 and PN1 fields may be derived from other fields within the message, potentially eliminating the need for a CCMP header entirely. When the device 202r receives a packet, it may reconstruct the CCMP header by combining the base PN including the PN2, PN3, PN4, and PN5 stored at the device 202r with the received PN0 and PN1 fields. The CCMP header may be reconstructed before decoding of the packet as the encoding of the packet including any CRC type fields such as a MIC field or FCS field may be based on the full CCMP header.

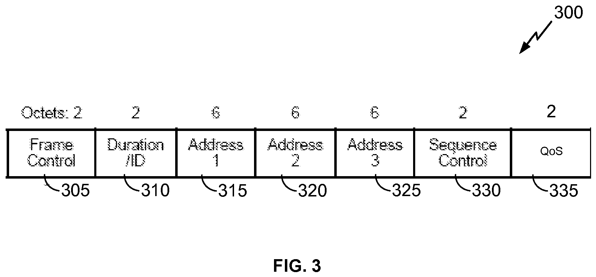

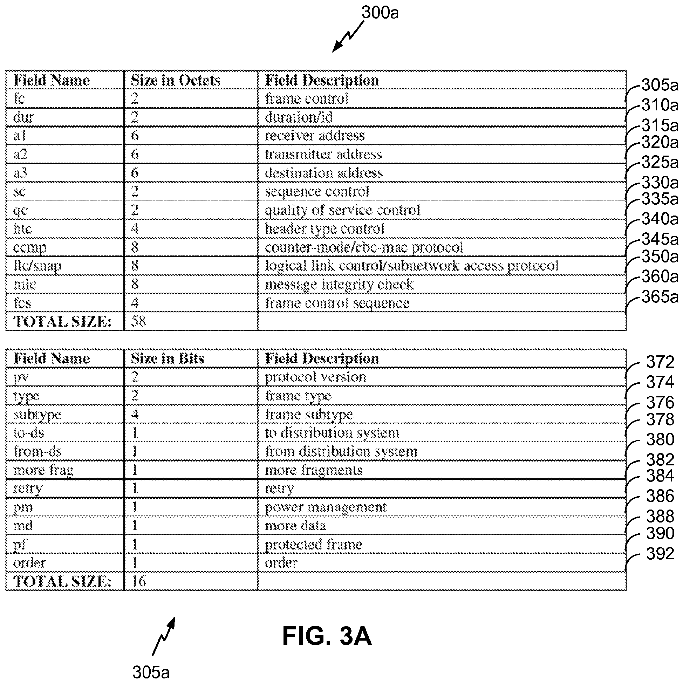

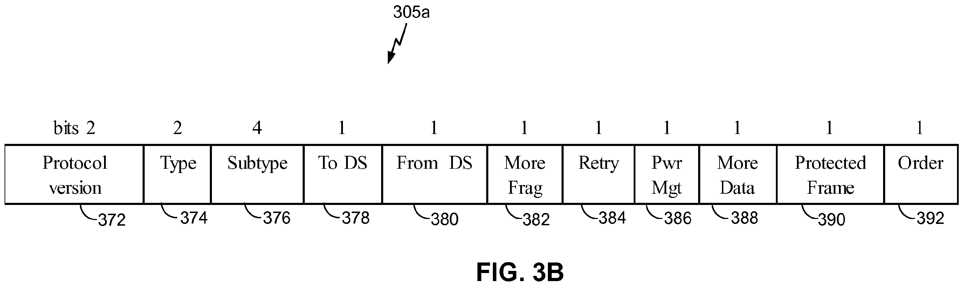

FIG. 3 illustrates an example of a MAC header 300. The MAC header 300 may be a non-compressed MAC header. As shown, the MAC header 300 includes 7 different fields: a frame control (fc) field 305, a duration/identification (dur) field 310, a receiver address (a1) field 315, a transmitter address (a2) field 320, a destination address (a3) field 325, a sequence control (sc) field 330, and a quality of service (QoS) control (qc) field 335. Each of the a1, a2, and a3 fields 315-325 comprises a full MAC address of a device, which is a 48-bit (6 octet) value. FIG. 3 further indicates the size in octets of each of the fields 305-335. Summing the value of all of the field sizes gives the overall size of the MAC header 300, which is 26 octets. The total size of a given packet may be on the order of 200 octets. Therefore, the MAC header 300 comprises a large portion of the overall packet size, meaning the overhead for transmitting a data packet is large.

FIG. 3A illustrates an example of a MAC header 300a, which is a 3-address MAC header using counter-mode with cipher block chaining message authentication code protocol (CCMP) encryption. As shown, the MAC header 300 includes 13 different fields: a frame control (fc) field 305a, a duration/identification (dur) field 310a, a receiver address (a1) field 315a, a transmitter address (a2) field 320a, a destination address (a3) field 325a, a sequence control (sc) field 330a, a quality of service (QoS) control (qc) field 335a, a high throughput (ht) control field 340a, a CCMP (ccmp) field 345a, a logical link control (LLC)/subnetwork access protocol (SNAP) (llc/snap) field 350a, a message integrity check (mic) field 360a, and a frame control sequence (fcs) field 365a.

FIGs. 3A and 3B further illustrate the types of data that may be included in the fc field 305a of the MAC header 300a. For example, the fc field 305a may include the following: a protocol version (pv) sub-field 372, a frame type (type) sub-field 374, a frame subtype (subtype) sub-field 376, a to distribution system (to-ds) sub-field 378, a from distribution system (from-ds) sub-field 380, a more fragments (more frag) sub-field 382, a retry sub-field 384, a power management (pm) sub-field 386, a more data (md) sub-field 388, a protected frame (pf) sub-field 390, and an order sub-field 392.

The pv sub-field 372 may be used to indicate the protocol version of the current frame. In the 802.11 standard (e.g., up to and including 802.11ad), a protocol version (pv) sub-field of the fc field is always set to 0, since protocol version 0 (PV0) is the only defined protocol version. Accordingly, the use of other values for the protocol version, i.e., 1 (PV1), 2 (PV2), and 3 (PV3), is not defined. The systems and methods discussed herein may define compressed MAC headers as part of protocol version 1 (PV1), PV2, and/or PV3. The protocol versions may be used interchangeably by devices for communication. For instance, PV0 defining use of a MAC header may be used for setting up a link, negotiating capabilities, and high speed data transfers. Further, PV1, PV2, and/or PV3 defining use of various compressed MAC header may be used for periodic short data transmissions when in power save mode.

In some aspects, the compressed format MAC header may use the existing protocol version 0 (PV0) or the newly defined protocol version 1 (PV1), PV2, and/or PV3. The use of PV1, PV2, and/or PV3 may avoid a situation where devices attempt to parse a received data packet based on the formatting of a PV0 frame. For example, devices may attempt to match the last 4 octets of the data packet to a frame control sequence (FCS). When it does match, the devices may use the value of the data that is in the position of the duration field to update their network allocation vector (NAV), even though there may not be a duration field at that location in the packet. The odds for such a false positive detection to occur may be high enough to cause glitches or jitter at some nodes, which may warrant the use of PV1, PV2, and/or PV3 for the compressed MAC header formats.

The frame type sub-field 374 is two bits in length and may be used to indicate the frame type and the function of the frame. In some aspects, the frame type sub-field 374 may indicate that the frame is a control frame, a data frame, or management frame. In some aspects, the frame type sub-field 374 may indicate that the frame is a beacon, a PNC selection, an association request, an association response, a disassociation request, an acknowledgment, a command, etc. The subtype sub-field 376 may be used to indicate the specific function to perform for the associated frame type. There may be multiple sub-type sub-fields for each frame type. The to-ds sub-field 378 may be used to indicate whether the frame is going to or is transmitted to a distributed system (ds). The from-ds sub-field 380 may be used to indicate whether the frame is exiting from the ds. In some aspects, the to-ds sub-field 378 and the from-ds sub-field 380 may be used only in data frame types. The more frag sub-field 382 may be used to indicate whether one or more additional fragments of the frame are to be transmitted. The retry sub-field 384 may be used to indicate whether or not the current frame is being retransmitted. For example, the retry sub-field 384 may be set to 1 in a frame that is a retransmission of an earlier frame. The power management (pm) sub-field 386 may be used to indicate a power management state. For example, the pm sub-field 386 may indicate whether an STA is in an active mode or a power-save mode. The more data (md) sub-field 388 may be used to indicate whether an additional frame is to be transmitted. For example, the md sub-field 388 may be used to indicate to a receiving STA that is in power-save mode that the AP has more frames buffered for delivery to the STA, and thus more frames to transmit to the STA. The protected frame (pf) sub-field 390 may be used to indicate whether frame protection is present. For example, the pf sub-field 390 may indicate whether or not encryption and/or authentication are used in the frame. In some aspects, for frames that have encryption and authentication, the pf sub-field 390 may be set to indicate encryption is present and the subtype sub-field 376 may be set to indicate that authentication is present. The order sub-field 392 may be used to indicate order information. For example, the order sub-field 392 may be used to indicate that all received data frames must be processed in order.

FIG. 3A further indicates the size in octets of each of the fields 305a-365a. Summing the value of all of the field sizes gives the overall size of the MAC header 300a, which is 58 octets. The total size of a given packet may be on the order of 200 octets. Therefore, the MAC header 300a comprises a large portion of the overall packet size, meaning the overhead for transmitting a data packet is large.

Accordingly, systems and methods for using MAC headers of reduced size (compressed MAC headers) for data packets are described herein. The use of such compressed MAC headers allows for less space in a data packet to be used by the MAC header, thereby reducing the overhead needed to transmit the payload in a data packet. Thus, less data needs to be transmitted overall. Less transmission of data can increase the speed with which data is transmitted, can reduce the use of bandwidth by a transmitter, and can reduce the power needed for transmission as fewer resources are used to transmit less data.

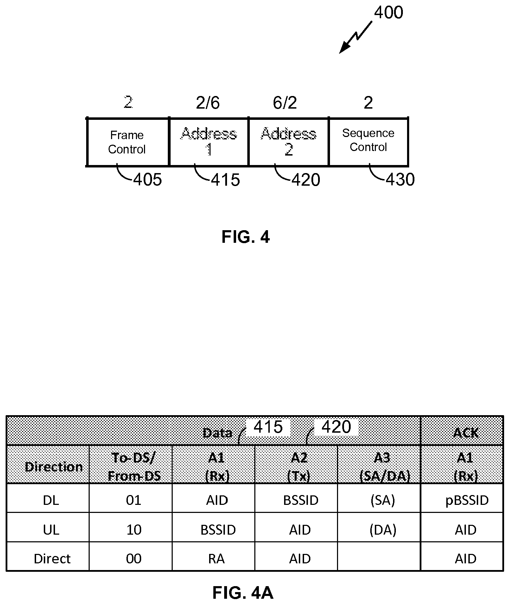

FIG. 4 illustrates an example of a compressed MAC header 400. As shown, the MAC header 400 includes 4 different fields: a frame control (fc) field 405, a first address (a1) field 415, a second address (a2) field 420, and a sequence control (sc) field 430. FIG. 4 further indicates the size in octets of each of the fields 405-430. Summing the value of all of the field sizes gives the overall size of the MAC header 400, which is 12 octets (a 54% reduction in size from the MAC header 300). As shown, one of the a1 field 415 and the a2 field 420 is 6 octets in length, while the other is 2 octets in length as further discussed below. The various fields of the MAC header 400 may be utilized according to several different aspects described below.

As shown in the MAC header 400, the dur field 310 may be omitted. Normally, a device receiving a data packet will decode at least the dur field 310, which indicates a time the device should not transmit so there are no interfering transmissions during the transmit opportunity. Instead of the dur field 310, devices may be configured to not transmit data after receiving a data packet that requires an acknowledgement until a time for such acknowledgement has passed. Such acknowledgement may be an ACK or BA, indicating the packet has been received. The devices may only be configured to defer transmission until an ACK may have been received for the packet if a field (e.g., an ACK policy field) in the packet indicates that the device should defer until an ACK is received. The field may be included in the MAC header or PHY header of the packet. The transmission of the response frame may be hidden for a STA that observes the data packet causing the response frame to be sent, but the indication in the data packet that an ACK may be present causes the observing STA to defer after the end of the data packet until the response frame may have been transmitted by the STA that is the destination of the data packet.

FIG. 4A illustrates examples of the type of data in the fields of the compressed MAC header 400 for a data packet, and the data for a corresponding acknowledgement according to one aspect of the MAC header 400. As shown, in the figure, the columns labeled "Data" correspond to the information sent as part of a data packet (as shown, the information for the a1 field 415 and the a2 field 420 and optionally an a3 field). Although illustrated fields are shown and described herein with reference to a particular size and order, in various aspects, fields herein can be resized, reordered, or omitted, and additional fields can be added.

The column labeled "ACK" corresponds to the information sent in a corresponding ACK. The column labeled "Direction" indicates the direction or link type over which the data packet is sent. In some aspects, instead of using a globally unique identifier for a device (e.g., MAC address) for both the a1 field 415 and the a2 field 420 as is used in the MAC header 300, one of the a1 field 415 or the a2 field 420 uses a local identifier, such as an access identifier (AID), that uniquely identifies a device in a particular BSS, but does not necessarily uniquely identify the device globally. As shown, if the MAC header 400 is part of a data packet transmitted over a downlink from an AP to an STA, the a1 field 415 includes a receiver AID (R-AID) and the a2 field 420 includes a BSSID.

The R-AID is the AID of the STA receiving the packet. The R-AID can comprise 13-bits allowing for 8192 STAs to be addressed uniquely in a given BSS by their R-AIDs. The 13-bit R-AID can allow for approximately 6000 STAs and 2192 other values, such as an indication that the packet is a multicast or broadcast packet, the type of the multicast or broadcast packet (i.e. a beacon), possibly in combination with a beacon change sequence number that indicates the version of the beacon that is comprised within the packet. The BSSID is the MAC address of the AP and can comprise 48 bits.

In some aspects, the BSSID can be replaced with a compressed version of the BSSID. For example, a compressed version of the BSSID can be an AID (e.g., 2 bytes instead of 6 bytes) which the AP can auto-assign to itself during network setup. The AID can be carefully selected in order to guarantee that other APs in the area do not have the same AID. The STA receiving the packet with the MAC header 400 can uniquely determine whether or not it is the intended recipient of the packet based on the a1 field 415 and the a2 field 420.

In particular, the STA can check to see if the R-AID matches the R-AID of the STA. If the R-AID matches, the STA can be the intended recipient of the packet. This alone may not uniquely determine whether the STA is the recipient, as STAs in different BSSs can have the same R-AID. Accordingly, the STA can further check to see if the a2 field 420 includes the BSSID of the AP (i.e., BSS) that the STA is associated with. If the BSSID matches the association of the STA and the R-AID, the STA uniquely determines it is the intended recipient of the packet and can further process the packet. Otherwise, the STA can ignore the packet.

If the STA determines it is the intended recipient, it can send an acknowledgment message (ACK) to the AP to indicate successful receipt of the packet. In one aspect, the STA can include all or a portion of the a2 field 420 such as a partial BSSID (pBSSID) comprising less than all the bits of the BSSID (e.g., 13 bits) in a MAC or physical layer (PHY) header of the ACK. In some aspects, the pBSSID can be a compressed version of the BSSID. In other aspects, the compressed version of the BSSID can be a pBSSID. Accordingly, in order to produce the ACK, the STA need only directly copy bits from the received MAC header 400, which reduces processing. The AP receiving the ACK can determine the ACK is from the STA if it is received soon after a certain time period (e.g., a short inter frame space (SIFS)) from transmission of the initial packet as it is unlikely the AP will receive two ACKs with the same information in the time period. In another aspect, the STA can transmit all or a portion of a cyclic redundancy check (CRC) from the packet or a hash of all or a portion of the packet in the MAC or PHY header of the ACK. The AP can determine the STA sent the ACK by checking for such information. Since such information is random for each packet, it is highly unlikely two ACKs with the same information will be received after the time period by the AP.

Further, the packet transmitted by the AP to the STA can optionally include a source address (SA) used for indicating a routing device to be used to route the packet. The MAC header 400 can further include a bit or field indicating whether the SA is present in the MAC header 400. In one aspect, the order bit of the frame control field of the MAC header 400 can be used to indicate presence or absence of the SA. In another aspect, two different subtypes can be defined for the compressed MAC header 400, one subtype including an a3 field such as the SA and one subtype not including the a3 field such as the SA. The subtype can be indicated via the value of a subtype field of the frame control field of the MAC header 400. In some aspects, the AP and STA can transmit information regarding the SA as part of another packet and omit the SA from the data packet. The STA can store the SA information and use it for all packets sent from the AP, or for certain packets that have a particular identifier associated with them (e.g., a flow ID) as discussed later.

As shown, if the MAC header 400 is part of a data packet transmitted over an uplink from an STA to an AP, the a1 field 415 includes a BSSID of the AP and the a2 field 420 includes an AID of the STA, which can be referred to as a transmitter AID (T-AID). The AP can similarly determine whether it is the intended recipient and the transmitter of the data packet based on the BSSID and the T-AID as discussed above. In particular, the AP can check to see if the BSSID matches the BSSID of the AP. If the BSSID matches, the AP is the intended recipient of the packet. Further, the AP can determine the transmitter of the packet based on the T-AID as only one STA in the BSS of the AP has the T-AID.

If the AP determines it is the intended recipient, it can send an acknowledgment message (ACK) to the STA to indicate successful receipt of the packet. In one aspect, the AP can include all or a portion of the a2 field 420 such as the T-AID in a MAC or physical layer (PHY) header of the ACK. Accordingly, in order to produce the ACK, the AP need only directly copy bits from the received MAC header 400, which reduces processing. The STA receiving the ACK can determine the ACK is from the AP if it is received soon after a certain time period (e.g., a short inter frame space (SIFS)) from transmission of the initial packet as it is unlikely the STA will received two ACKs with the same information in the time period. In another aspect, the AP can transmit all or a portion of a cyclic redundancy check (CRC) from the packet or a hash of all or a portion of the packet in the MAC or PHY header of the ACK. The STA can determine the AP sent the ACK by checking for such information. Since such information is random for each packet, it is highly unlikely two ACKs with the same information will be received after the time period by the STA.

In some aspects, the address field of the ACK can include one or more global addresses (e.g., a MAC address, BSSID) that uniquely identifies a transmitter and/or receiver of the ACK globally (e.g., in most any network). In some aspects, the address field can include one or more local addresses (e.g., an association identifier (AID)) that uniquely identifies a transmitter and/or receiver of the ACK locally (e.g., in a local network such as in a particular BSS). In some aspects, the address field can include a partial or non-unique identifier (e.g., a portion of a MAC address or AID) that identifies a transmitter and/or receiver of the ACK. For example, the address field can be one of the AID, MAC address, or a portion of the AID or MAC address of the transmitter and/or receiver of the ACK that is copied from the frame being acknowledged by the ACK.

In some aspects, the identifier field of the ACK can identify the frame being acknowledged. For example, in one aspect, the identifier field can be a hash of the content of the frame. In another aspect, the identifier field can include all of or a portion of the CRC (e.g., the FCS field) of the frame. In another aspect, the identifier field can be based on all of or a portion of the CRC (e.g., the FCS field) of the frame and all or a portion of a local address (e.g., AID of an STA). In another aspect, the identifier field can be a sequence number of the frame. In another aspect, the identifier field can include one or more of the following in any combination: one or more global addresses of the transmitter/receiver of the ACK, one or more local addresses of the transmitter/receiver of the ACK, one or more portions of global addresses of the transmitter/receiver of the ACK, or one or more portions of local addresses of the transmitter/receiver of the ACK. For example, the identifier field can include a hash of a global address (e.g., BSSID, MAC address of an AP) and a local address (e.g., AID of an STA) as shown in Equation 1.

$$(\mathrm{dec}(AID[0:8]) + \mathrm{dec}(BSSID[44:47]\ \mathrm{XOR}\ BSSID[40:43])\ 2\hat{\ }5)\ \mathrm{mod}\ 2\hat{\ }9 \quad (1) \qquad \textbf{(Equation 1)}$$

where dec() is a function that converts a hexadecimal number to a decimal number. Other hash functions based on the same inputs can be implemented without departing from the scope of the disclosure.

In some aspects the frame for which the ACK is sent in response can include a token number set by the transmitter of the frame. The transmitter of the frame can generate the token number based on an algorithm. In some aspects, the token number generated by the transmitter can have a different value for each frame sent by the transmitter.

In such aspects, the receiver of the frame can use the token number in the identifier field of the ACK to identify the frame being acknowledged such as by setting the identifier as the token number or computing the identifier based at least in part on the token number. In some aspects, the identifier field can be computed as a combination of the token number with at least one of the following: one or more global addresses of the transmitter/receiver of the ACK, one or more local addresses of the transmitter/receiver of the ACK, one or more portions of global addresses of the transmitter/receiver of the ACK, one or more portions of local addresses of the transmitter/receiver of the ACK, or all or a portion of a CRC of the frame. In some other aspects the token number can be included in another field of the ACK and/or frame being acknowledged such as a SIG field and/or a control information (Control Info) field. In some aspects the token can be derived from a scrambling seed in a SERVICE field, which can come after a PHY preamble, of the frame being acknowledged.

By the techniques described above, the response frame (e.g., ACK, CTS, BA) can echo a value, such as a FCS or random number (e.g., packet ID), in the initiating frame (e.g., data, RTS, BAR). The echo value can be based, at least in part, on the scrambler seed. The echoed value can be transmitted in the scrambler seed field of the response frame. The echoed value can be transmitted in the SIG field of the response frame. The echoed value can be transmitted in the MPDU included in the response frame.

In some implementations, it can be desirable for the frame check sum (FCS) of the initiating frame (e.g., data, RTS, BAR) to be based on or include a random number (e.g., packet ID). This value can be used as the echo value. In such implementations, the echo value can be included in the scrambled seed of the initiating frame. Accordingly, the FCS can be echoed in full or in part in the response frame (e.g., ACK, CTS, BA).

Through the use of the echo value, by including an echo value, the response frame may not include the station identifier of the initiating frame. One or more of the addressing schemes on an initiating frame (e.g., Data, RTS, BAR, etc.) can be used with the response frame (e.g., ACK, CTS, BA, etc.) that echoes the FCS or a packet ID of the initiating frame, but not a station identifier. This can improve communications as described above.

Further, the packet transmitted by the STA to the AP can optionally include a destination address (DA) used for indicating a routing device to be used to route the packet. The MAC header 400 can further include a bit or field indicating whether the DA is present in the MAC header 400. In one aspect, the order bit or an "a3 present" bit of the frame control field of the MAC header 400 can be used to indicate presence or absence of the DA. In another aspect, two different subtypes can be defined for the compressed MAC header 400, one subtype including an a3 field such as the DA and one subtype not including the a3 field such as the DA. The subtype can be indicated via the value of a subtype field of the frame control field of the MAC header 400. In some aspects the values of the subtype indicating presence or omission of the DA are the same values as used to indicate presence or omission of the SA for DL packets. In some aspects, the AP and STA can transmit information regarding the DA as part of another packet and omit the DA from the data packet. The AP can store the DA information and use it for all packets sent from the STA, or for certain packets that have a particular identifier associated with them (e.g., a flow ID).

As shown, if the MAC header 400 is part of a data packet transmitted over a direct link from a transmitting STA to a receiving STA, the a1 field 415 includes a full receiver address (RA) of the receiving STA and the a2 field 420 includes an AID of the transmitting STA, which can be referred to as the transmitter AID (T-AID). The receiving STA can similarly determine whether it is the intended recipient and the transmitter of the data packet based on the RA and the T-AID as discussed above. In particular, the receiving STA can check to see if the RA matches the RA of the receiving STA. If the RA matches, the receiving STA is the intended recipient of the packet. Further, the receiving STA can determine the transmitter of the packet based on the T-AID as only one transmitting STA in the BSS of the receiving STA has the T-AID.

If the receiving STA determines it is the intended recipient, it can send an acknowledgment message (ACK) to the transmitting STA to indicate successful receipt of the packet. In one aspect, the receiving STA can include all or a portion of the a2 field 420 such as the T-AID in a MAC or physical layer (PHY) header of the ACK. Accordingly, in order to produce the ACK, the receiving STA need only directly copy bits from the received MAC header 400, which reduces processing. The transmitting STA receiving the ACK can determine the ACK is from the receiving STA if it is received soon after a certain time period (e.g., a short inter frame space (SIFS)) from transmission of the initial packet as it is unlikely the transmitting STA will receive two ACKs with the same information in the time period. In another aspect, the receiving STA can transmit all or a portion of a cyclic redundancy check (CRC) from the packet or a hash of all or a portion of the packet in the MAC or PHY header of the ACK. The transmitting STA can determine the receiving STA sent the ACK by checking for such information. Since such information is random for each packet, it is highly unlikely two ACKs with the same information will be received after the time period by the transmitting STA.

Whether the packet is sent as part of a downlink, uplink, or direct link can be indicated by certain bits in the MAC header 400. For example, the to-distribution system (to-ds) and from-ds fields of the fc field 405 can be used to indicate the link type used for sending the packet (e.g., 01 for the downlink, 10 for the uplink, and 00 for the direct link) as shown in the column labeled To-DS/From-DS. Accordingly, the recipient of a packet can determine the length (e.g., 2 octets or 6 octets) of the a1 field 415 and a2 field 420 based on the type of address that is expected in each field and thus determine the address contained in each field.

In another aspect, instead of indicating whether the packet is a part of a downlink, uplink, or direct link, 1 bit (e.g., a 1 bit substitute for the to-ds/from-ds field) can be used in the MAC header 400 to indicate which type of address is in each of the a1 field 415 and a2 field 420. For example, one value of the bit can indicate the a1 field 415 is the address of the receiver of the data packet and the a2 field 420 is the address of the transmitter of the data packet. The other value of the bit can indicate the a1 field 415 is the address of the transmitter of the data packet and the a2 field 420 is the address of the receiver of the data packet.

Compression of MAC headers can be performed by removing or modifying certain sub-fields of the frame control field of the MAC header. The compressed MAC header can then be sent from the wireless device 202t to the wireless device 202r. Removal or modification of the sub-fields can be based on the information that needs to be communicated to the wireless device 202r of the data packet. For example, the wireless device 202r may not need all the information in the frame control field 305a of the MAC header 300 to receive and process the data packet. For example, in some cases the receiver can already have some of the information stored in memory that would be transmitted in the frame control field 305a. In one case, the wireless device 202r can have received that information in a previously received data packet from the wireless device 202t, such as in the MAC header of the previous data packet or a messaging packet. In another case, the wireless device 202r can have such information pre-programmed such as at the time of manufacture, or through communication with another device. In some aspects, the wireless device 202r can indicate to the wireless device 202t information (e.g., values for fields of the MAC header) that is stored at the wireless device 202r. The wireless device 202t can then omit such information from the sub-fields of the frame control field, or other fields of the MAC header, in packets sent to the wireless device 202r.

In certain aspects, headers can have different fields when security is enabled for the data packet. For example, the packet can have a counter mode with cipher block chaining message authentication code protocol (CCMP) header when security is enabled. The CCMP header can be part of the MAC header. Normally, the CCMP header includes several packet numbers (PNs) (e.g., PN0, PN1, PN2, PN3, PN4, and PN5). The values of PN2, PN3, PN4, and PN5 may not change often. Accordingly, a base PN can be created based on PN2, PN3, PN4, and PN5 (e.g., PN2 | PN3 | PN4 | PN5). The base PN can be sent as part of a message and stored for a pair of communicating devices. The CCMP header can therefore not include the PN2, PN3, PN4, and PN5, but only the PN0 and PN1 fields. The receiver of a packet can reconstruct the CCMP header by combining the base PN including the PN2, PN3, PN4, and PN5 stored at the receiver with the received PN0 and PN1 fields. In some aspects, the security related packet number (PN) can be generated from the sequence number (SN) of the sequence control (SC) field and the base packet number (BPN). The CCMP header can be reconstructed before decoding of the packet as the encoding of the packet including any CRC type fields such as a MIC field or FCS field can be based on the full CCMP header. In various aspects, such aspects can be referred to as "compressed security headers." Such aspects can be related to aspects described in U.S. Provisional Application No. 61/514,365, filed August 2, 2011.

In some aspects, compressed security headers may only be employed in certain protocol versions. For example, in one aspect, compressed security headers can be employed in protocol version 1 (PV1), but not in protocol version 0 (PV0). Thus, in systems that include multiple protocol versions, PV1 packets can include security PNs based on the packet SN, whereas PV0 packets can include security PNs that may not be based on the packet SN. In some aspects, the PV0 security implementation is modified to interoperate with PV1. A modified PV0 security implementation, however, may not be compatible with a legacy PV0 security implementation. Accordingly, it can be desirable to separate security implementations between protocol versions.

In one aspect, the wireless device 202 (FIG. 2) can maintain a separate set of replay counters for each of a plurality of protocol versions. A replay counter can be used to determine that every newly received packet has a unique packet number within the specific packet number space to which the packet belongs. For example, the wireless device 202 can maintain one replay counter per traffic indicator (TID) and per transmitter address (TA) for PV0. The wireless device 202 can further maintain one replay counter per TID and per TA for PV1. Thus, in some aspects, the wireless device 202 may not coordinate security PNs between protocol versions.

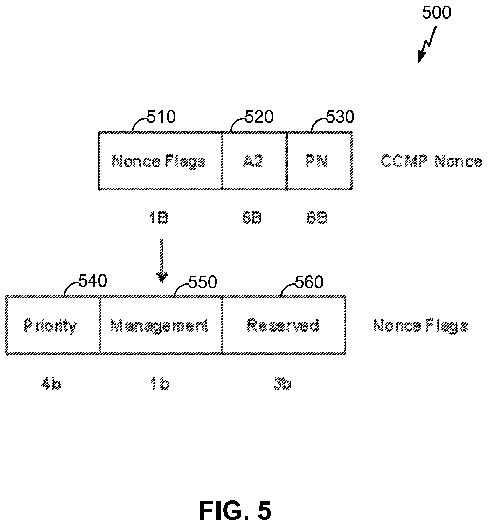

In aspects where the wireless device 202 maintains separate sets of replay counters for PV0 and PV1, it is possible for a PV0 packet to have the same PN as a PV1 packet. Accordingly, in legacy aspects where the CCMP nonce is based at least in part on the PN, it is possible for the same nonce to occur twice for a given encryption key. Thus, in certain aspects, it can be desirable to implement separate nonce formats for each protocol version. FIGS. 5-6 show exemplary nonce formats for PV0 and PV1 implementations, respectively.

FIG. 5 illustrates a cryptographic nonce 500 that can be used in wireless communication according to a first protocol version. A person having ordinary skill in the art will appreciate that the various fields described herein can be rearranged, resized, some fields can be omitted, and additional fields can be added. As shown, the nonce 500 includes nonce flags 510, an address (A2) field 520, and a packet number (PN) field 530. In the illustrated aspect, the nonce flags 510 are one byte, the address field 520 is 6 bytes, and the PN field 530 is 6 bytes. The nonce flags include a 4-bit priority field 540, a 1-bit management flag 550, and three reserved bits 560. In an aspect, the A2 field 520 can indicate a transmitter address of the packet containing the nonce.

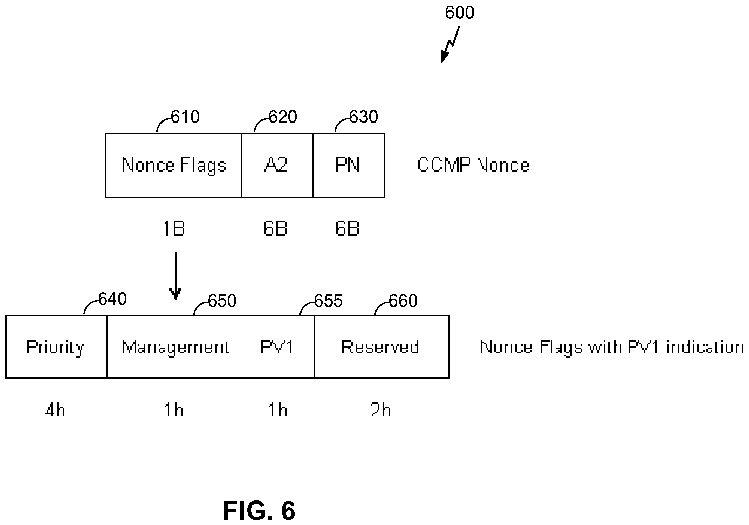

FIG. 6 illustrates a cryptographic nonce 600 that can be used in wireless communication according to a second protocol version. A person having ordinary skill in the art will appreciate that the various fields described herein can be rearranged, resized, some fields can be omitted, and additional fields can be added. As shown, the nonce 600 includes nonce flags 610, an address (A2) field 620, and a packet number (PN) field 630. In the illustrated aspect, the nonce flags 610 are one byte, the address field 620 is 6 bytes, and the PN field 630 is 6 bytes. The nonce flags include a 4-bit priority field 640, a 1-bit management flag 650, a 1-bit protocol version indication 655, and two reserved bits 660. In an aspect, the A2 field 520 can indicate a transmitter address of the packet containing the nonce.

In various aspects, the protocol version indication 655 can indicate a protocol version of the nonce 600. For example, the protocol version indication 655 can be a flag that, when set, indicates that the packet is transmitted using PV1, and when not set, indicates that the packet is transmitted using a protocol version that is not PV1. In another aspect, the protocol version indication 655 can be a flag that, when set, indicates that the packet is transmitted using a protocol version that is not PV0, and when not set indicates that the packet is transmitted using PV0. In other aspects, the protocol version indication 655 can include additional bits that can indicate a specific protocol version used.

In other aspects, both PV0 and PV1 can use the same nonce format. In some aspects, the wireless device 202 can derive a separate encryption key for a plurality of protocol versions. For example, the wireless device 202 can derive separate transient keys (TKs) for PV0 packets and PV1 packets, respectively. Accordingly, although the same nonce value can occasionally be generated for both PV0 and PV1 transmissions, the separate encryption keys can ensure nonce uniqueness for a given security key.

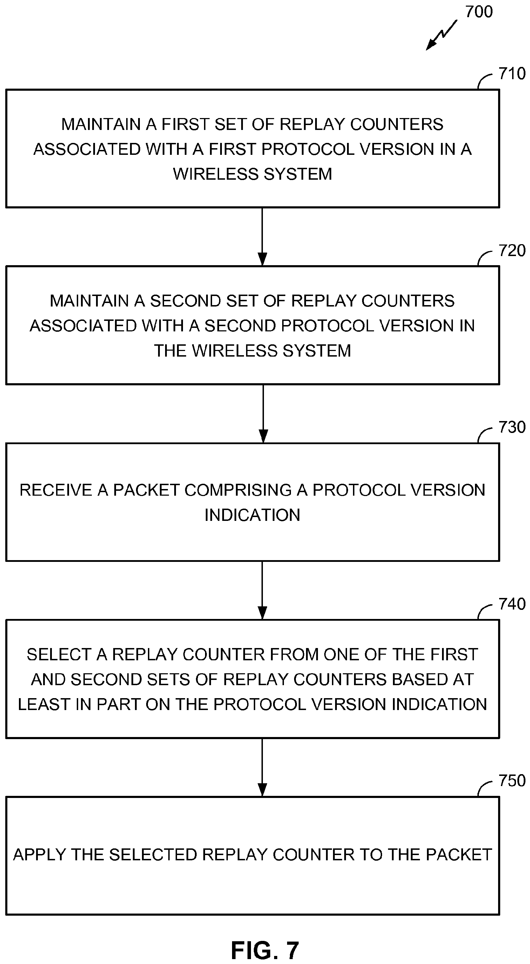

FIG. 7 shows a flowchart 700 for an exemplary method of wireless communication that can be employed within the wireless communication system 100 of FIG. 1. The method can be implemented in whole or in part by the devices described herein, such as the wireless device 202 shown in FIG. 2. Although the illustrated method is described herein with reference to the wireless communication system 100 discussed above with respect to FIG. 1, and the wireless device 202 discussed above with respect to FIG. 2, a person having ordinary skill in the art will appreciate that the illustrated method can be implemented by another device described herein, or any other suitable device. Although the illustrated method is described herein with reference to a particular order, in various aspects, blocks herein can be performed in a different order, or omitted, and additional blocks can be added.

First, at block 710, the device 202 maintains a first set of replay counters associated with a first protocol version in a wireless system. For example, the processor 204 can maintain one or more replay counters associated with PV0 in the memory 206. The processor 204 can use the replay counters to determine whether a newly received PV0 packet has a unique packet number within the specific packet number space to which the packet belongs.

Next, at block 720, the device 202 maintains a second set of replay counters associated with a second protocol version in the wireless system. For example, the processor 204 can maintain one or more replay counters associated with PV1 in the memory 206. The processor 204 can use the replay counters to determine whether a newly received PV0 packet has a unique packet number within the specific packet number space to which the packet belongs.

In various aspects, the first and second sets of replay counters can each include at least one replay counter per traffic indicator and per transmitter address.

Then, at block 730, the device 202 receives a packet including a protocol version indication. The packet can include one or more of the headers and/or fields described herein. For example, the receiver 212 can receive a PV0 or PV1 frame as described herein.

In various aspects, the packet can include a first security header having a first length when the protocol version indication indicates the first protocol version. For example, a PV0 packet can include a regular MAC header and/or security header as described above (e.g., the header 300 described above with respect to FIG. 3).

In various aspects, the packet can include a second security header having a second length, smaller than the first length, when the protocol version indication indicates the second protocol version. For example, a PV1 packet can include a shortened MAC header and/or compressed security header as described herein (e.g., the header 400 described above with respect to FIG. 4).

In various aspects, the device 202 can generate, based on the received packet, a nonce including a protocol version indication. For example, the processor 204 can generate the nonce 500, described above with respect to FIG. 5, for a PV0 packet. The processor 204 can generate the nonce 600, described above with respect to FIG. 6, for a PV1 packet.

In various aspects, the nonce can include one or more of: a four-bit priority field, a one-bit management field, a one-bit protocol indication flag, a six-byte transmitter address field, and a six-byte packet number field. In various aspects, the one-bit protocol indication flag can indicate the second protocol version when set. Thus, in certain aspects, the nonce can include the nonce 600 described above with respect to FIG. 6.

Subsequently, at block 740, the device 202 selects a replay counter from one of the first and second sets of replay counters based at least in part on the protocol version indication. For example, the processor 204 can determine whether the packet is a PV0 or a PV1 packet based on the packet indication (such as the protocol version field 372 in the frame control field 305a, described above with respect to FIG. 3A). The processor 204 can select the set of replay counters associated with the protocol version of the packet.

Thereafter, at block 750, the device 202 applies the selected replay counter to the packet. For example, the processor 204 can retrieve the selected replay counter from the memory 206. In various aspects, applying the selected replay counter can include selectively discarding the packet based on the replay counter. For example, the processor 204 can discard the packet when the PN of the packet is lower (or older) than the selected replay counter.

In various aspects, the device 202 can derive a first encryption key associated with the first protocol version and a second encryption key associated with the second protocol version. For example, the processor 204 can generate separate encryption keys for PV0 and PV1, as discussed above.

In various aspects, the device 202 can decode a portion of the packet using the first encryption key when the protocol version indication indicates the first protocol version. The device 202 can decode a portion of the packet using the second encryption key when the protocol version indication indicates the second protocol version. For example, the processor 204 can determine whether the packet is a PV0 packet or a PV1 packet (such as the protocol version field 372 in the frame control field 305a, described above with respect to FIG. 3A). The processor 204 can apply the associated encryption key based on the protocol version of the packet. In various aspects, the first and second encryption keys can include temporal keys.

In an aspect, the method shown in FIG. 7 can be implemented in a wireless device that can include a maintaining circuit, a receiving circuit, a selecting circuit, and an applying circuit. Those skilled in the art will appreciate that a wireless device can have more components than the simplified wireless device described herein. The wireless device described herein includes only those components useful for describing some prominent features of implementations within the scope of the claims.

The maintaining circuit can be configured to maintain the first and second sets of replay counters. The maintaining circuit can be configured to perform at least blocks 710 and/or 720 of FIG. 7. The maintaining circuit can include one or more of the processor 204 (FIG. 2), the memory 206 (FIG. 2), the receiver 212 (FIG. 2), the antenna 216 (FIG. 2), and the transceiver 214 (FIG. 2). In some implementations, means for maintaining can include the maintaining circuit.

The receiving circuit can be configured to receive the packet. The receiving circuit can be configured to perform at least block 730 of FIG. 7. The receiving circuit can include one or more of the receiver 212 (FIG. 2), the antenna 216 (FIG. 2), and the transceiver 214 (FIG. 2). In some implementations, means for receiving can include the receiving circuit.

The selecting circuit can be configured to select the replay counter. The selecting circuit can be configured to perform at least block 740 of FIG. 7. The selecting circuit can include one or more of the processor 204 (FIG. 2) and the memory 206 (FIG. 2). In some implementations, means for selecting can include the selecting circuit.

The applying circuit can be configured apply the selected replay counter to the packet. The applying circuit can be configured to perform at least block 750 of FIG. 7. The applying circuit can include one or more of the processor 204 (FIG. 2) and the memory 206 (FIG. 2). In some implementations, means for applying can include the applying circuit.

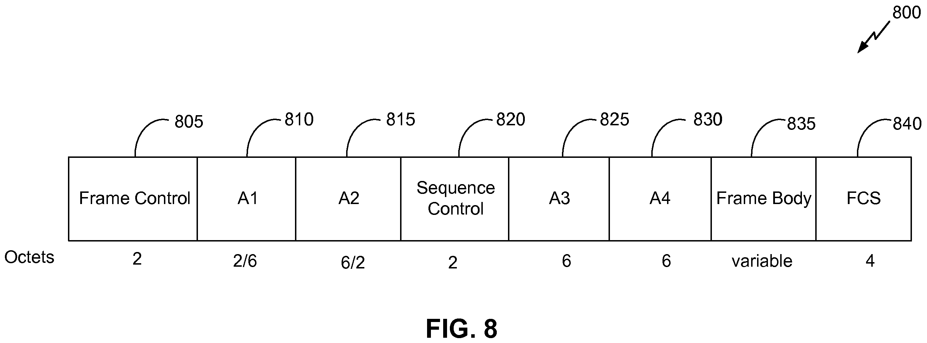

FIG. 8 illustrates a short media access control header 800. The short media access control header 500 includes a frame control field 805, an A1 field 810, an A2 field 815, a sequence control field 820, an A3 field 825, an A4 field 830, a variable length frame body 835, and a frame check sequence field 840. In some aspects, as discussed below, one or more of the A3 field 825 and/or the A4 field 830 may be omitted from the short media access control header 800.

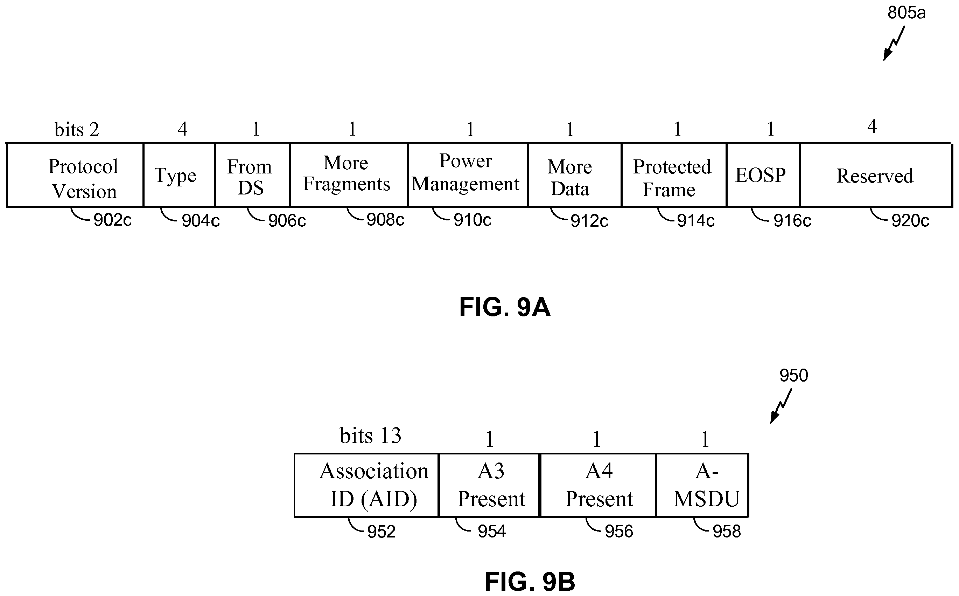

FIG. 9A illustrates an example of a frame control field 805a of a compressed MAC header. The fc field 805a includes the following sub-fields in the following order: a protocol version sub-field 902c, a frame type (type) sub-field 904c, a from DS field 906c, a more fragments sub-field 908c, a power management sub-field 910c, a more data sub-field 912c, a protected frame (pf) sub-field 914c, an end of service period (eosp) sub-field 916c, and a reserved field 920c. In some aspects, the frame control field 805 illustrated in FIG. 8 may substantially conform to the format of the frame control field 805a of FIG. 9A.

As described above, there may be four address fields in a MAC frame including the frame control field 805a. For example, these address fields may be used to indicate the recipient of the frame (a1), the transmitter of the frame (a2), and optionally the source and/or the destination of the frame (a3 and/or a4). In some aspects, the recipient of the frame (a1) or the transmitter of the frame (a2) may be identified by an AID sub-field located in a short ID (S-ID) field. Whether the a1 or the a2 field includes the AID may depend on the value of the from-ds field 906c of the frame control field as described above. For example, if the from-ds sub-field is set to 0, the a1 field may include the AID and the a2 field may include the BSSID. As another example, if the from DS sub-field is set to 1, the a2 field may include the AID and the a1 field may include the BSSID and/or the receiver address. FIG. 9B illustrates an example of a short ID (S-ID) field 950 of a compressed MAC header. The S-ID field 950 may be included in the a1 field or the a2 field of the MAC header. For example, the a1 and/or the a2 field may be assigned the AID 952 at association, which may be included in the S-ID field 950. In some aspects, the length of the S-ID field is 2 octets (16 bits). The S-ID field 950 may further include an A3 present sub-field 954, an A4 present sub-field 956, and an A-MSDU sub-field 958. The AID sub-field 952 may include 13 bits, which leaves 3 bits remaining. The remaining 3 bits may be used to store the A3 present sub-field 952, the A4 present sub-field 954, and the A-MSDU sub-field 956. Accordingly, the frame control field does not include these sub-fields.

In some aspects, the presence of A3, which is optional, is indicated by the A3 present sub-field 954 and the presence of A4, which is also optional, is indicated by the A4 present sub-field 956. In some aspects, when the A3 field is not present, A3 is either stored at the recipient of the frame or, if an A3 is not stored at the recipient of the frame, A3 is equal to A1. In some aspects, when the A4 field is not present, A4 is either stored at the recipient of the frame or, if an A4 is not stored at the recipient of the frame A4 is equal to A2. In some aspects, if the A-MSDU sub-field 958 is set to 1, the MPDU contains a short A-MSDU. In some aspects, if the A-MSDU sub-field 958 is set to 1, the MPDU contains an A-MSDU that carries multiple MSDUs, each of which has a source address and/or destination address and the addressing depends on a mapping similar to A4 present/A3 present per each MSDU.

In some aspects, the frame control field 805 may include a Key ID sub field. For example, or more bits of the reserved field 920c may be used for the Key ID sub field. Key ID sub-field may include 1 or two bits. In some aspects, if the protected frame sub-field 914c is set to a value of 1 (indicating that the frame is protected), the Key ID sub-field may be used to indicate to the device receiving the MAC header including the frame control field 805a whether the encryption method, and/or the key, has changed. By including the key ID sub-field in the frame control field 805a and thus a media access control header for a data unit, a CCMP header may be reduced or eliminated from the MAC header for the data unit. In some aspects, if the protected frame sub-field 914c is set to a value of 0 (indicating that the frame is not protected), the Key ID sub-field may be reserved so that it can be used for other functions. For example, if the frame is a management frame, the Key ID sub-field may be reserved and may be used to define different management frame sub-types. The management frame sub-types may include an Action frame, an Action no Ack frame, and the like.

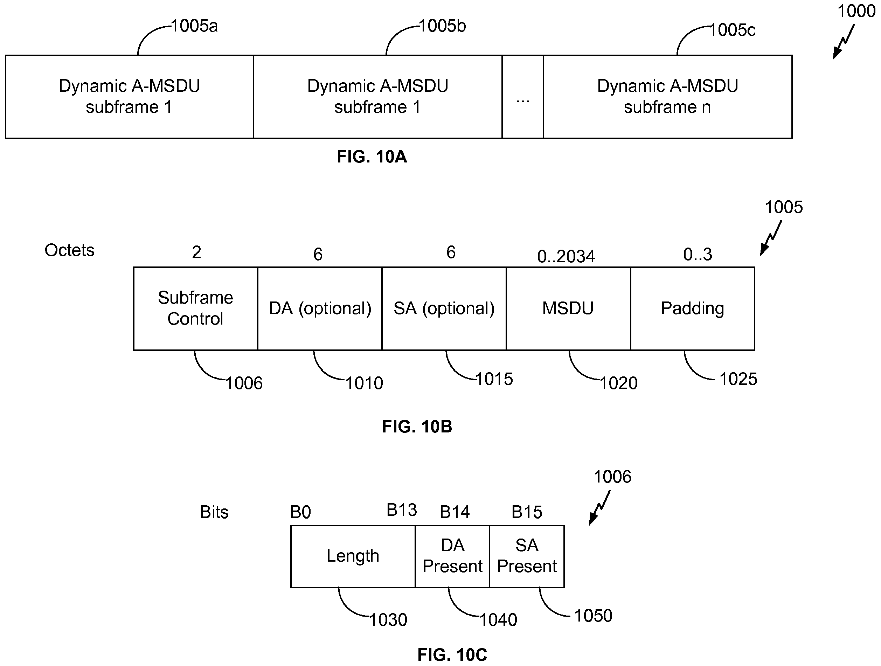

FIG. 10A illustrates a dynamic A-MPDU frame. 1000. The dynamic A-MPDU frame 1000 includes a plurality of dynamic A-MSDU sub-frames, including sub-frame 1005a, sub-frame 1005b, and sub-frame 1005c.

FIG. 10B illustrates an example format of an A-MSDU sub-frame. In some aspects, the sub-frame 1005 may correspond to one or more of the sub-frames 1005a-c shown in FIG. 10A. The sub-frame 1005 includes a sub-frame control field 1006, a destination address field 1010, a source address field 1015, an MSDU field 1020, and one or more padding bytes 1025.

FIG. 10C illustrates an example format of a sub-frame control field. The sub-frame control field 1006 includes a length field 1030, a destination address present field 1040 and a source address present field 1050. The length field 1030 may indicate a length of the sub-frame of which the sub-frame control field is a part. For example, the length field may indicate a length of the sub-frame control field 1006, destination address field 1010 (if present), source address field 1015 (if present), MSDU field 1020, and any padding bits 1025. Alternatively, the length field may not include the length of the sub-frame control field 1006.

In some aspects, the presence of the destination address field 1010, which is optional, is indicated by the DA present sub-field 1040 and the presence of source address field 1015, which is also optional, is indicated by the SA present sub-field 1050. In some aspects, when the destination address field 1010 is not present, the destination address is stored at the recipient of the frame. In some aspects, when the source address field 1015 is not present, the source address is stored at the recipient of the frame. One or more of the destination address and source address may be stored at a destination via a media access control header compression request message as described below. One or more of the destination address and source address may be updated at a destination by transmitting a sub-frame 1005 that includes a DA field 1010, or SA field 1015 after the destination has agreed to store one or more of the DA fields 1010 or SA fields 1015 via a header compression request/reply exchange as described below with respect to information element 1300.

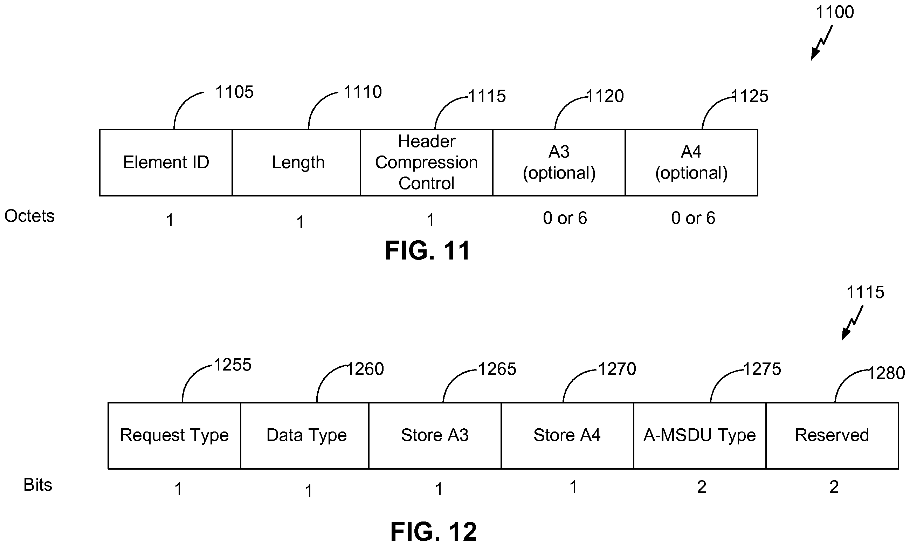

FIG. 11 shows an example of at least a portion of a header compression request or response message including a header compression information element (IE). The header compression information element 1100 may request that one or more of an A3 field, or an A4 field, such as A3 field 1120 or A4 field 1125, be stored at a device receiving the request message information element 1100. By storing values for the A3 field or A4 field at the receiver, future transmissions to the receiving device may utilize a media access control header that omits fields stored at the receiver. In some aspects, the header compression information element 1100 may be transmitted as part of an association request (or reply) or re-association request (or reply) frame.

The header compression information element 1100 includes an element id field 1105, a length field 1110, a header compression control field 1115, an optional A3 field 1120, and an optional A4 field 1125. The element ID field 1105 is one octet in length and is set to a particular value to indicate the information element is a header compression information element. The length field is one octet in length and is set to be equal to the sum of the lengths of each optional field if present in the information element. A value of two is added to the length field to reflect the combined length of the element id field and the length field. The header compression control field 1115 is one octet in length and is described in more detail below with respect to FIG. 12. The A3 field 1120 is six octets in length if present. The A3 field 1120 is a value that a device receiving the header compression information element should utilize as an A3 field value for subsequently received media access control headers that do not include an A3 field. The A4 field 1125 is six octets in length if present. The A4 field 1125 provides a value that a device receiving the header compression information element 1100 should utilize as an A4 field for subsequently received media access control headers that do not include an A4 field.

FIG. 12 shows an example of a header compression control field 1115. The header compression control field 1115 includes a request type field 1255, data type field 1260, store A3 field 1265, store A4 field 1270, an A-MSDU type field 1275, and a reserved field 1280. The request type field 1255 indicates whether the message 1100 is a header compression request or a header compression response. In some aspects, if the request type field is zero, the message 1100 is a header compression request. In these aspects, if the request type field is one (1), the message/information element 1100 is a header compression response.

The data type field 1260 indicates how short data frames will be transmitted. If the data type field is set to a first particular value, it indicates that short data frames will include a media access control header that has a type field in a frame control field set to zero (0). If the data type field 1260 is a second particular value, short data frame s will be transmitted with a type field in a frame control field set to three (3). If the message 1100 is a header compression response, the data type field will be the same value as a data type field in a corresponding header compression request message.

The store A3 field 1265 indicates whether a receiver of the message or information element 1100 is requested to store an A3 field specified in the A3 field 1120. If the store A3 field 1265 is a first particular value, then the A3 field 1120 will be present in the header compression information element 1100, and the receiver is requested to store the value for use/substitution in future media access control headers that are received without an A3 field. If the store A3 field 1265 is a second particular value, the A3 field 1120 may not be present in the header compression information element/message 1100. In some aspects, the first particular value is one (1) and the second particular value is zero (0).

When the message/information element 1100 is a header compression response, the store A3 field 1265 indicates whether the device transmitting the header compression response will store the A3 field as requested. A first particular value of the store A3 field 1265 indicates the device transmitting the header compression response will store the message and a second particular value of the store A3 field 1265 in the header compression response indicates that the device transmitting the header compression response will not store the A3 field.

The store A4 field 1270 indicates whether a receiver of the message 1100 is requested to store an A4 field specified in the A4 field 1125. If the store A4 field 1270 is a third particular value, then the A4 field 1125 will be present in the header compression information element 1100, and the receiver is requested to store the value for use in future media access control headers that are received without an A4 field. If the store A4 field 1270 is a fourth particular value, the A4 field 1120 may not be present in the header compression information element/message 1100. In some aspects, the third particular value is one (1) and the fourth particular value is zero (0).

When the message/information element 1100 is a header compression response, the store A4 field 1270 indicates whether the device transmitting the header compression response will store the A4 field as requested. A third particular value of the store A4 field 1270 indicates the device transmitting the header compression response will store the message and a second particular value of the store A4 field 1270 in the header compression response indicates that the device transmitting the header compression response will not store the A4 field.

When the information element 1100 is a header compression request, the A-MSDU field 1275 requests a format of A-MSDUs for the transmitter to transmit to the receiver of the information element/message 1100. In one aspect, if the A-MSDU field 275 is set to a first particular value, the A-MSDU field 1275 requests/indicates that aggregation of MSDUs is not performed. If the A-MSDU field 1275 equals a second particular value, the transmitter of the information element 1100 requests that "short" versions (i.e. those not including destination address or source address fields) of dynamic A-MSDU messages be transmitted to the receiver. If the A-MSDU field equals a third particular value, the transmitter of the information element 1100 requests that "long" versions (i.e. those including destination address and source address fields) of dynamic A-MSDU messages be transmitted to the receiver. If the A-MSDU type field 1275 equals a fourth particular value, the transmitter requests that any version of dynamic A-MSDU format messages may be transmitted to the receiver. In some aspects, the values of the first, second, third, and fourth particular values are zero (0), one (1), two (2), and three (3) respectively.

When the information element 1100 is a header compression response, the value of the A-MSDU type indicates which type of A-MSDU's the receiver accepts. In some aspects, if the receiver agrees to receive A-MSDU's as specified in the header compression request, the value of the A-MSDU type field 1275 in the header compression response will be the same as the value in the corresponding header compression request. Alternatively, in some aspects, the receiver may indicate that it receives A-MSDU's of a different format. For example, if the transmitter indicated it intends to send short A-MSDU's only, the receiver may respond in the header compression response that no short A-MSDU's may be sent. For example, the receiver may indicate via the A-MSDU type field 1275 that no A-MSDU's may be processed by it and/or transmitted to it, or that only long A-MSDU's may be processed by it and/or transmitted to it.

In some other aspects, a value of the A-MSDU type field 1275 in a header compression response 1100 may be unrelated to any value of an A-MSDU type field 1275 in a corresponding header compression request. In these aspects, the value of the A-MSDU type field 1275 indicates which type of A-MSDU's the receiver accepts or processes.

In one aspect, if the A-MSDU field 1275 is set to a first particular value, the A-MSDU field 1275 indicates that the transmitter of the header compression response does not accept or process aggregation of MSDUs. Therefore, A-MSDUs should not be transmitted to the transmitter of the header compression response. If the A-MSDU field 1275 equals a second particular value, the transmitter of the header compression response indicates that only "short" versions (i.e. those not including destination address or source address fields) of dynamic A-MSDU messages are processable by it and/or should be transmitted to it. For example, perhaps the transmitter is unable to properly or accurately decode "long" versions of A-MSDUs in this case. If the A-MSDU field 1275 equals a third particular value, the transmitter of the header compression response/information element 1100 indicates that only "long" versions (i.e. those including destination address and source address fields) of dynamic A-MSDU messages can be processed by it and/or should be transmitted to it. If the A-MSDU type field 1275 equals a fourth particular value, the transmitter of the header compression response/IE 1100 indicates that any version of dynamic A-MSDU format messages may be processed by it and/or transmitted to it. In some aspects, the values of the first, second, third, and fourth particular values are zero (0), one (1), two (2), and three (3) respectively.

The reserved field 1280 is two bits in length and is unused in some aspects.

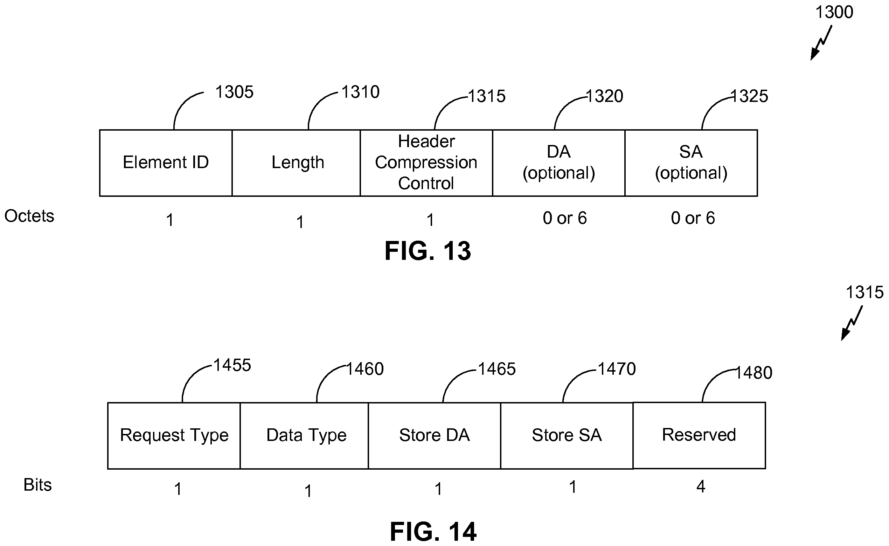

FIG. 13 shows an example of at least a portion of a header compression request or response message that includes a header compression information element (IE) 1300. The header compression request/response information element 1300 may request that one or more of a destination address field or a source address field be stored at a device receiving the request message version of information element 1300. By storing values for the destination address field or the source address field at the receiver, future transmissions to the receiving device may utilize a Dynamic A-MSDU sub-frame, such as sub-frame 1005 shown in FIG. 10B, that omits field(s) stored at the receiver. In some aspects, the header compression information element 1300 may be transmitted as part of an association request or reply or re-association request or reply frame.

The header compression information element 1300 includes an element id field 1305, a length field 1310, a header compression control field 1315, an optional A3 field 1320, and an optional A4 field 1325. The element ID field 1305 is one octet in length and is set to a particular value to indicate the information element is a header compression information element. The length field is one octet in length and is set to be equal to the sum of the lengths of each optional field if present in the information element. A value of two is added to the length field to reflect the combined length of the element id field and the length field. The header compression control field 1315 is one octet in length and is described in more detail below with respect to FIG. 14. The DA field 1320 is six octets in length if present. The DA field 1320 is a value that a device receiving the header compression information element should utilize as a destination address field value for subsequently received sub-frames that are part of a dynamic A-MSDU, such as sub-frame 1005 shown in FIG. 10B, that do not include a destination address field. The SA field 1325 is six octets in length if present. The SA field 1325 provides a value that a device receiving the header compression information element 1300 should utilize as an source address field for subsequently received sub-frames that are part of a dynamic A-MSDU, such as sub-frame 1005 shown in FIG. 10B, that do not include a source address field.

FIG. 14 shows an example of a header compression control field 1315. The header compression control field 1315 includes a request type field 1455, data type field 1460, store destination address field 1465, store source address field 1470, and a reserved field 1480. The request type field 1455 indicates whether the information element 1300 is a header compression request or a header compression response. In some aspects, if the request type field is zero, the message 1300 is a header compression request. In these aspects, if the request type field 1455 is one (1), the message/information element 1300 is a header compression response.

The data type field 1460 indicates how short data frames will be transmitted. If the data type field 1460 is set to a first particular value, it indicates that short data frames will include a media access control header that has a type field in a frame control field set to zero (0). If the data type field 1460 is a second particular value, short data frame s will be transmitted with a type field in a frame control field set to three (3). If the message/ information element 1300 is a header compression response, the data type field will be the same value as a data type field in a corresponding header compression request message.

The store DA field 1465 indicates whether a receiver of the message 1300 is requested to store a destination address field specified in the DA field 1320. If the store DA field 1465 is a first particular value, then the DA field 1320 will be present in the header compression information element 1300, and the receiver is requested to store the value for use in future dynamic A-MSDU sub-frames, such as sub-frame 1005, that are received without an DA field. If the store A3 field 1465 is a second particular value, the DA field 1320 may not be present in the header compression information element/message 1300. In some aspects, the first particular value is one (1) and the second particular value is zero (0).

When the message/information element 1300 is a header compression response, the store DA field 1465 indicates whether the device transmitting the header compression response will store the DA field as requested. A first particular value of the store DA field 1465 indicates the device transmitting the header compression response will store the message and a second particular value of the store DA field 1465 in the header compression response indicates that the device transmitting the header compression response will not store the DA field 1320 specified in the corresponding header compression request.

The store SA field 1470 indicates whether a receiver of the message 1300 is requested to store an SA field specified in the SA field 1325. If the store SA field 1470 is a third particular value, then the SA field 1325 will be present in the header compression information element 1300, and the receiver is requested to store the value for use in future media access control headers that are received without an SA field. If the store SA field 1470 is a fourth particular value, the SA field 1320 may not be present in the header compression information element/message 1300. In some aspects, the third particular value is one (1) and the fourth particular value is zero (0).

When the message/information element 1300 is a header compression response, the store SA field 1470 indicates whether the device transmitting the header compression response will store the SA field as requested. A third particular value of the store SA field 1470 indicates the device transmitting the header compression response will store the message and a second particular value of the store SA field 1470 in the header compression response indicates that the device transmitting the header compression response will not store the SA field 1325 specified in the corresponding header compression request.

The reserved field 1480 is four bits in length and is unused in this example aspect. One of ordinary skill would recognize that the header compression request/response information element 1100 may be combined in various ways with the header compression request/response information element 1300. For example, an information element including A3, A4, DA, and SA fields may be provided.

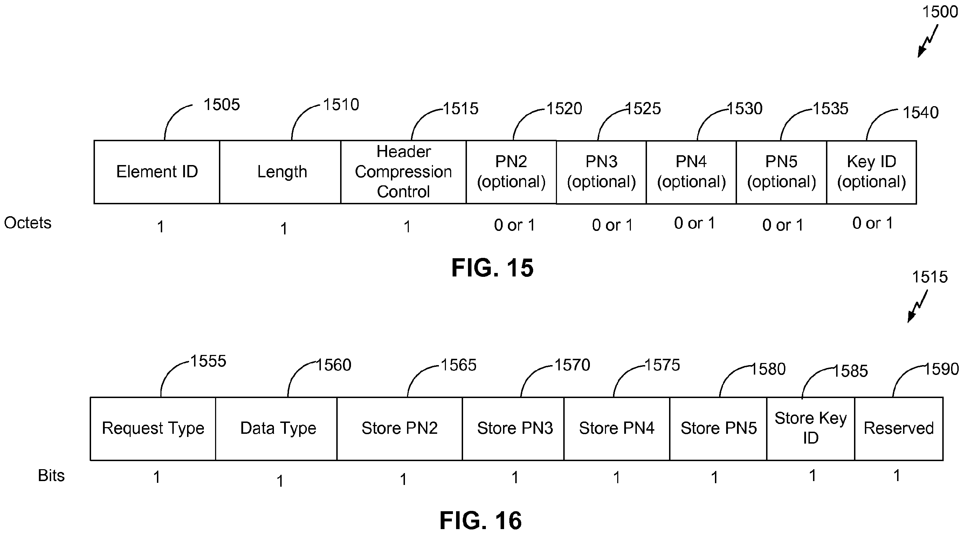

FIG. 15 shows another example of at least a portion of a header compression request or response message including a header compression information element (IE) 1500. When the information element 1500 defines a header compression request, the information element 1500 may request that one or more packet numbers and/or or a key ID be stored at a device receiving the information element 1500. By storing values for the packet numbers and/or key id at the receiver, future transmissions to the receiving device may utilize a media access control header and/or a CCMP header that omits any fields stored at the receiver.

As discussed above, in certain aspects, headers can have different fields when security is enabled for the data packet. For example, the packet can have a counter mode with cipher block chaining message authentication code protocol (CCMP) header when security is enabled. The CCMP header can be part of the MAC header. Normally, the CCMP header includes several packet numbers (PNs) (e.g., PN0, PN1, PN2, PN3, PN4, and PN5). However, values of PN2, PN3, PN4, and PN5 may not change often. Therefore, a size of the media access control header may be reduced by storing values for the PN2, PN3, PN4, and PN5 at the receiver, and omitting those values from media access control headers until the values change. In some aspects, when a transmitter determines that one or more of the PN2, PN3, PN4, and PN5 values change, the values stored at the receiver may be updated by the transmitter including those fields in a media access control header transmitted to the receiver. If the receiver has previously agreed to store those values, for example, via an exchange of information element 1500 between the transmitter and the receiver, sending a message to the receiver including those values may cause the receiver to update the stored values in at least some of the disclosed aspects. In some aspects, the header compression information element 1500 may be transmitted as part of an association request or re-association request frame.

The header compression information element 1500 includes an element id field 1505, a length field 1510, a header compression control field 1515, an optional PN2 field 1520, an optional PN3 field 1525, an optional PN4 field 1530, and an optional PN5 field 1535. The information element 1500 also includes an optional key id field 1540.

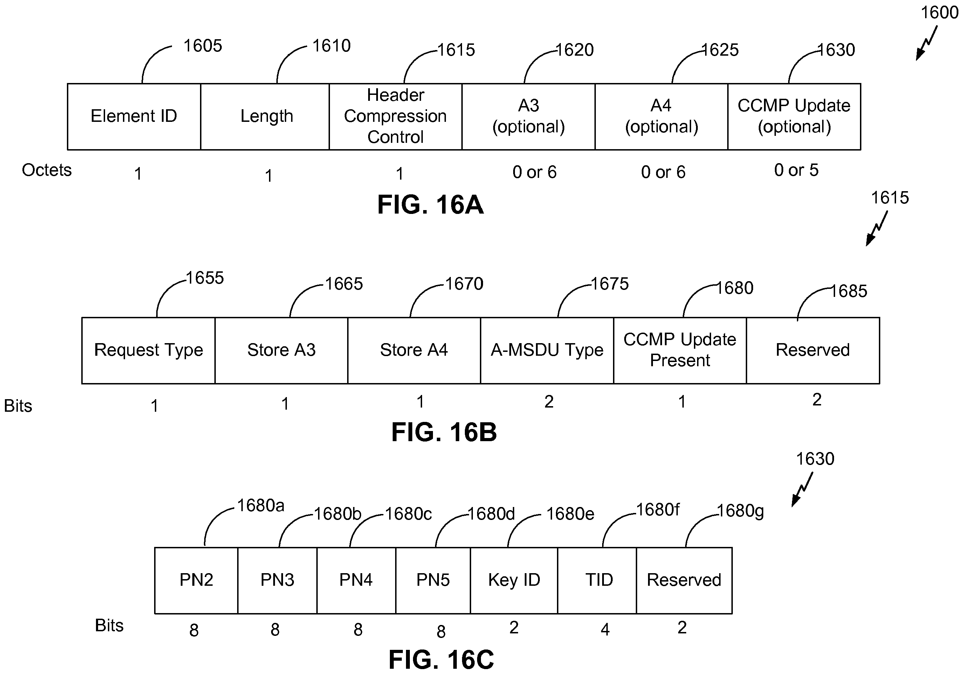

The element ID field 1505 is one octet in length and is set to a particular value to indicate the information element is a header compression information element. The length field 1510 is one octet in length and is set to be equal to the sum of the lengths of each optional field if present in the information element. In some aspects, a value of two is added to the length field to reflect the combined length of the element id field and the length field. The header compression control field 1515 is one octet in length and is described in more detail below with respect to FIG. 16.

When the header compression information element 1500 defines a header compression request, the PN2-PN5 fields 1520-1535 specify values that a device receiving the header compression information element is requested to utilize as PN2-PN5 values subsequently received media access control headers that do not include such values. The Key ID field 1540 is 1 octet in length if present. If the information element 1500 is a compression request, the Key ID field 1540 provides a value that a device receiving the header compression information element 1500 should utilize as a key ID for subsequently received media access control headers that do not include a key ID field.

FIG. 16 shows an example of a header compression control field 1515. The header compression control field 1515 includes a request type field 1555, data type field 1560, store PN2 field 1565, store PN3 field 1570, a store PN4 field 1575, a store PN5 field 1580, a store key ID field 1585, and a reserved field 1590. The request type field 1555 indicates whether the information element 1500 is a header compression request or a header compression response. In some aspects, if the request type field is zero, the message 1500 is a header compression request. In these aspects, if the request type field is one (1), the message/information element 1500 is a header compression response.

The data type field 1560 indicates how short data frames will be transmitted. If the data type field is set to a first particular value, it indicates that short data frames will include a media access control header that has a type field in a frame control field set to zero (0). If the data type field 1560 is a second particular value, short data frames will be transmitted with a type field in a frame control field set to three (3). If the message/ information element 1500 is a header compression response, the data type field 1560 will be the same value as a data type field in a corresponding header compression request message.

The store PN2-PN5 fields 1565-1580 indicate whether a receiver of the message/information element 1500 is requested to store one of the corresponding PN2-PN5 values 1520-1535 of the information element 1500. If one or more of the Store PN2-Store PN5 fields 1565-1580 is a first particular value, then the corresponding PN2-PN5 fields 1520-1535 will be present in the header compression information element 1500, and the receiver is requested to store the value for use in media access control headers received in the future that do not include the indicated field(s). If any of the store PN2-Store PN5 fields 1565-1580 are a second particular value, the corresponding PN2-PN5 fields 1520-1535 may not be present in the header compression information element/message 1500. In some aspects, the first particular value is one (1) and the second particular value is zero (0).

When the message/information element 1500 is a header compression response, the store PN2-store PN5 fields 1565-1580 indicate whether the device transmitting the header compression response will store the corresponding fields specified in the header compression request. A first particular value of the store PN2-store PN5 fields 1565-1580 indicate the device transmitting the header compression response will store the corresponding fields specified in the header compression request and a second particular value of the store PN2-store PN5 fields 1565-1580 in the header compression response indicate that the device transmitting the header compression response 1500 will not store the PN2-PN5 fields 1520-1535 specified in the corresponding header compression request 1500.

The store Key ID field 1585 indicates whether a receiver of the information element 1500 is requested to store a key id value specified in the key id field 1540. If the store key ID field 1585 is a third particular value, then the key id field 1540 will be present in the information element 1500, and the receiver is requested to store the value for use in future media access control headers that are received without a key id field. If the store Key ID field 1540 is a fourth particular value, the key ID field 1540 may not be present in the header compression information element/message 1500. In some aspects, the third particular value is one (1) and the fourth particular value is zero (0).

When the message/information element 1500 is a header compression response, the store key ID field 1585 indicates whether the device transmitting the header compression response will store the key ID field 1540 as requested. A third particular value of the store Key ID field 1585 indicates the device transmitting the header compression response will store the message and a second particular value of the store Key ID field 1585 in the header compression response indicates that the device transmitting the header compression response will not store the Key ID field 1540 specified in the corresponding header compression request.

The reserved field 1590 is one bit in length and is unused in some example aspects. One of ordinary skill would recognize that one or more of the header compression request/response information element 1100 and/or 1300 may be combined in various ways with the header compression request/response information element 1500. For example, an information element including A3, A4, DA, SA, and PN2-PN5 fields, and corresponding Store A3, Store A4, Store DA, Store SA, and Store PN2-PN5 fields may be provided. Other combinations of information elements 1100 and 1300 are also possible, some of which include all or only portions of each of IE's 1100 and 1300.

FIG. 16A shows an example of at least a portion of a header compression request or response message that includes an information element 1600. When the information element 1600 defines a header compression request, the information element 1600 may request that an A3 field, an A4 field, or one or more CCMP fields be stored at a device receiving the information element 1600. By storing values for the fields at the receiver, future transmissions to the receiving device may utilize a media access control header and/or a CCMP header that omits fields stored at the receiver.

The information element 1600 includes an element id field 1605, a length field 1610, a header compression control field 1615, an optional A3 field 1620, an optional A4 field 1625 and an optional CCMP Update field 1630. The element ID field 1605 is one octet in length and is set to a particular value to indicate the information element is a header compression information element. The length field 1610 is one octet in length and is set to be equal to the sum of the lengths of each optional field if present in the information element. In some aspects, a value of two is added to the length field 1610 to reflect the combined length of the element id field and the length field. The header compression control field 1615 is one octet in length and is described in more detail below with respect to FIG. 16B.

When the header compression information element 1600 defines a header compression request, the A3 and/or A4 fields 1620-1625 specify values that a device receiving the header compression information element is requested to utilize as A3 or A4 values subsequently received media access control headers that do not include such values. The CCMP update field 1630 is zero or five octets in length if present. If the information element 1600 is a compression request, the CCMP update field 1540 may provide value that a device receiving the header compression information element 1600 should substitute for CCMP header values in a subsequently received media access control header that do not include the particular CCMP header values.

FIG. 16B shows an example of a header compression control field 1615. The header compression control field 1615 includes a request type field 1655, store A3 field 1665, store A4 field 1670, a A-MSDU type field 1675, a CCMP Update Present field 1680, and a reserved field 1685. The request type field 1655 indicates whether the information element 1600 is a header compression request or a header compression response. In some aspects, if the request type field is zero, the message/information element 1600 is a header compression request. In these aspects, if the request type field 1655 is one (1), the message/information element 1600 is a header compression response.

The store A3 field 1665 indicates whether a receiver of the message 1600 is requested to store an A3 field specified in the A3 field 1620. If the store A3 field 1665 is a first particular value, then the A3 field 1620 will be present in the header compression information element 1600, and the receiver is requested to store the value for use in future media access control headers that are received without an A3 field. If the store A3 field 1665 is a second particular value, the A3 field 1620 may not be present in the header compression information element/message 1600. In some aspects, the first particular value is one (1) and the second particular value is zero (0).

When the message/information element 1600 is a response, the store A3 field 1665 indicates whether the device transmitting the header compression response will store the A3 field as requested. A first particular value of the store A3 field 1665 indicates the device transmitting the header compression response will store the message and a second particular value of the store A3 field 1665 in the header compression response indicates that the device transmitting the header compression response will not store the A3 field.

The store A4 field 1670 indicates whether a receiver of the message 1600 is requested to store an A4 field specified in the A4 field 1625. If the store A4 field 1670 is a third particular value, then the A4 field 1625 will be present in the header compression information element 1600, and the receiver is requested to store the value for use in future media access control headers that are received without an A4 field. If the store A4 field 1670 is a fourth particular value, the A4 field 1620 may not be present in the header compression information element/message 1600. In some aspects, the third particular value is one (1) and the fourth particular value is zero (0).

When the message/information element 1600 is a response, the store A4 field 1670 indicates whether the device transmitting the response will store the A4 field as requested. A first particular value of the store A4 field 1670 indicates the device transmitting the header compression response will store the message and a second particular value of the store A4 field 1670 in the header compression response indicates that the device transmitting the header compression response will not store the A4 field.

When the information element 1600 is a header compression request, the A-MSDU type field 1675 requests which format of A-MSDUs the transmitter can transmit to the receiver of the information element/message 1600. In one aspect, if the A-MSDU field 1675 is set to a first particular value, the A-MSDU type field 1675 requests/indicates that aggregation of MSDUs is not performed. If the A-MSDU type field 1675 equals a second particular value, the transmitter of the information element 1600 requests that "short" versions (i.e. those not including destination address or source address fields) of dynamic A-MSDU messages be transmitted to the receiver. If the A-MSDU type field equals a third particular value, the transmitter of the information element 1600 requests that "long" versions (i.e. those including destination address and source address fields) of dynamic A-MSDU messages be transmitted to the receiver. If the A-MSDU type field 1675 equals a fourth particular value, the transmitter requests that any version of dynamic A-MSDU format messages may be transmitted to the receiver. In some aspects, the values of the first, second, third, and fourth particular values are zero (0), one (1), two (2), and three (3) respectively.

When the information element 1600 is a header compression response, the value of the A-MSDU type field 1675 indicates which type of A-MSDU's the receiver accepts. In some aspects, if the receiver agrees to receive A-MSDU's as specified in the header compression request, the value of the A-MSDU type field 1675 in the header compression response will be the same as the value in the corresponding header compression request. Alternatively, in some aspects, the receiver may indicate that it receives A-MSDU's of a different format. For example, if the transmitter indicated it intends to send short A-MSDU's only, the receiver may respond in the header compression response that no A-MSDU's may be sent or that only long A-MSDUs may be sent.

In some other aspects, a value of the A-MSDU type field 1675 in a header compression response 1600 may be unrelated to any value of an A-MSDU type field 1675 in a corresponding header compression request. In these aspects, the value of the A-MSDU type field 1675 indicates which type of A-MSDU's the receiver accepts. In one aspect, if the A-MSDU field 1675 is set to a first particular value, the A-MSDU field 1675 indicates that the transmitter of the header compression response cannot process and/or does not accept messages including aggregation of MSDUs. If the A-MSDU field 1675 equals a second particular value, the transmitter of the header compression response indicates that only "short" versions (i.e. those not including destination address or source address fields) of dynamic A-MSDU messages should be transmitted to it. For example, the transmitter of the response may be unable to process "long" versions of A-MSDUs. If the A-MSDU field 1675 equals a third particular value, the transmitter of the header compression response/information element 1600 indicates that only "long" versions (i.e. those including destination address and source address fields) of dynamic A-MSDU messages should be transmitted to it. In this case, the transmitter of the response may be unable to decode or process short A-MSDU messages. If the A-MSDU type field 1675 equals a fourth particular value, the transmitter of the header compression response/IE 1600 indicates that any version of dynamic A-MSDU format messages may be processed by it and transmitted to it. In some aspects, the values of the first, second, third, and fourth particular values are zero (0), one (1), two (2), and three (3) respectively.

The CCMP update present field 1680 indicates whether the CCMP update field 1630 is present in the message/information element 1600. In some aspects, if the CCMP update present field 1680 is set to one (1) and the request type field 1655 is set to 0 (indicating the message/IE is a header compression request) the CCMP update field 1630 is present in the message/IE 1600. The reserved field 1685 is two bits in length and is unused in this example aspect. One of ordinary skill would recognize that one or more of the header compression request/response information element 1100 and/or 1300 and/or 1500 may be combined in various ways with the header compression request/response information element 1600. For example, an information element including A3, A4, DA, SA, and PN2-PN5 fields may be provided, portions or all of any of IE's 1100, 1300, 1500, or 1600 may be combined in some aspects.

FIG. 16C illustrates on example of a CCMP update field 1630 in a header compression information element 1600. The CCMP update field 1630 includes PN2-PN5 fields 1680a-d, a key ID field 1680e, a traffic identifier (TID) field 1680f, and a reserved field 1680g.

The PN2-PN5 fields 1680a-1680d contain values for packet numbers 2-5 for use in decrypting messages transmitted by a device transmitting the message/information element 1600. Normally, a CCMP header includes several packet numbers (PNs) (e.g., PN0, PN1, PN2, PN3, PN4, and PN5). However, values of PN2, PN3, PN4, and PN5 may not change often. Therefore, a size of the media access control header may be reduced by storing values for the PN2, PN3, PN4, and PN5 at the receiver, and omitting those values from media access control headers until the values change. The packet number fields 1680a-1680d may store values associated with this counter mode with cipher block chaining message authentication code protocol (CCMP) for the traffic identifier indicated by the TID field 1680f.

The Key ID field 1680e contains a value for a key identifier. In some aspects, if a protected frame sub-field in a subsequent media access control header transmitted by a device transmitting the message/IE 1600 is set to a value of 1 (indicating that the frame is protected), the Key ID sub-field may be used to indicate to the device receiving the MAC header whether an encryption method, and/or the key, for the traffic identifier indicated by the TID field 1680f has changed. By storing the key ID sub-field at a receiver of the message/IE 1600, a CCMP header may be reduced or eliminated from subsequent MAC header transmitted between the transmitter of the IE 1600 and the receiver. The reserved field 1680g is two bits in length and may be unused in some aspects.

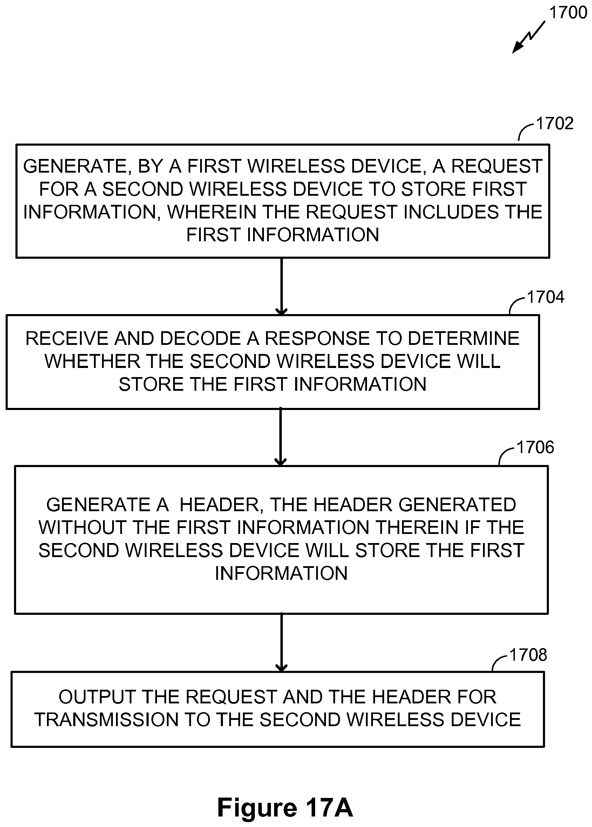

FIG. 17A is a flowchart of a method for wireless communication utilizing compressed headers. In some aspects, the method may be performed by the device 202. In some aspects, method 1700 may be performed by a device that will transmit compressed media access control headers. As discussed above, the length of media access control headers can be a significant percentage of wireless network traffic. By compressing media access control headers, utilization of a wireless medium may be reduced, allowing for greater transmission of non-overhead data, with a corresponding increase in maximum throughput for the media access control medium.

In block 1702, a request to a second wireless device to store information is generated. The request may be generated by a first wireless device. In some aspects, the request is a header compression request. In some aspects, the request is a media access control header compression request. Other header types are contemplated. In some aspects, the request is part of an association or a reassociation request from a station to an access point. In some aspects, the request may be generated to include the information that the second wireless devices is being requested to store.

In some aspects the request is output for transmission to the second wireless device. In some aspects, outputting for transmission may include transmitting the request. In some other aspects, outputting for transmission may include notifying a processing system, a hardware or software module or interface that a request can or should be transmitted. In some aspects, the request is generated to include at least portions of one or more of the information elements 1100, 1300, 1500, or 1600 described with respect to FIGs. 11-12, 13-14, 15-16, or 16A-16C respectively. In some aspects, the request is included in an association request or a reassociation request.

In some aspects, the request and/or the first information is generated to request that a second wireless device store one or more packet numbers or a key identifier associated with counter mode with cipher block chaining message authentication code protocol (CCMP). For example, the request may be generated to include information element 1500. The request may be generated to include the first information.

In some aspects, the request and/or the first information is generated to request that the second wireless device store destination address or source address information associated with an MSDU encapsulated in an A-MSDU.

In some aspects, the request and/or the first information is generated to request permission to transmit short A-MSDUs to the second wireless device. For example, the request may substantially include information element 1100 or 1600, and the A-MSDU type field may be set to an appropriate value that indicates permission to transmit short A-MSDUs is requested.

In some aspects, the request and/or the first information is generated to request permission to transmit both short A-MSDUs and long A-MSDU's to the second wireless device. For example, the request may substantially include information element 1100, and the A-MSDU type field may be set to a second appropriate value that indicates permission to transmit both short and long A-MSDU's is requested.

In block 1704, a response is received and decoded by the first wireless device. In some aspects, the response may be an association response or a reassociation response that includes one of the information elements 1100, 1300, 1500, or 1600, or some combination of portions of one or more of the same. The response may correspond to the request provided for transmission in block 1702. The response is decoded to determine whether the second wireless device will store the first information. For example, in some aspects, the response may be decoded to identify a information element substantially similar to information element 1100, and/or 1300, and/or 1500 and/or 1600, or a combination of a portion of these, as discussed above with respect to FIGs. 11-12, 13-14, 15-16, or 16A-16C respectively.

In block 1706, a header is generated. In some aspects, the header is a media access control header. The header is generated to not include the first header information if the second wireless device will store the first header information. For example, headers in substantial accordance with the headers described by FIGS. 8, 9A-B, 10A-C may be generated in block 1706. Because the second wireless device has indicated (in the response decoded in block 1704 above) that it will store the first information, this information is not part of the generated header in block 1706. Upon receiving the generated header, the second wireless device will "substitute" the stored first information for any information missing from the generated MAC header.

In block 1708, the generated header is output for transmission. In some aspects, the request may also be output for transmission in block 1708. In some aspects, block 1708 includes transmitting the generated header. In other aspects, outputting for transmission of the header may include notifying a software or hardware module or interface that the generated header is ready for transmission or should be transmitted.

As discussed above, after information associated with a header has been stored at a receiver, a transmitter may determine that the stored information should be updated. To effect an update of information stored at a receiver, in some aspects, a transmitter can transmit a new header to the receiver that includes the updated information. For example, if particular fields of a header are stored at a receiver, transmitting a header with one or more of those particulars fields included in the header will update the stored information to be consistent with the newly transmitted information. In some aspects, the transmitter may then begin sending additional headers that do not include one or more of the updated fields. In some aspects, the receiver will associate the newly updated fields with the new headers.

Note that in some aspects, headers that are transmitted without some information may indicate, in the header or otherwise, that the information is missing. For example, if a destination address or source address is omitted from an MSDU encapsulated in a A-MSDU, a sub-frame control field included in the MSDU sub-frame may indicate that the destination address or source address is missing, as described above with respect to FIGs. 10A-C. Similarly, if A3 or A4 address fields are omitted from a header, a SID field such as SID field 950 may indicate that the fields are omitted from the header (as described above with respect to FIGs. 9A-B.

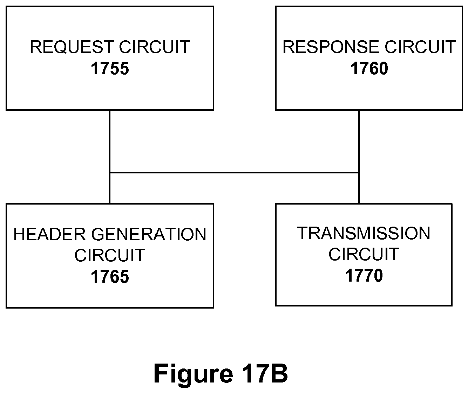

FIG. 17B is a functional block diagram of an exemplary wireless device 1750 that may be employed within the wireless communication system 100. The device 1750 comprises a request circuit 1755. The request circuit 1755 may be configured to perform one or more of the functions discussed above with respect to the block 1702 illustrated in FIG. 17A. In some aspects, the request circuit 1755 may correspond to the processor 204 and/or the transmitter 210. In some other aspects, the request circuit may be configured to generate a request for a second wireless device to store first information. In some aspects, the means for generating a request for a second apparatus to store first information may include the request circuit 1755.

The device 1750 further comprises a response circuit 1760. The response circuit 1760 may be configured to perform one or more of the functions discussed above with respect to block 1704 illustrated in FIG. 17A. In some aspects, the response circuit 1760 may correspond to the processor 204, the transceiver 214, and/or the receiver 212. In some other aspects, the response circuit may be configured to determine whether the second wireless device will store the first information. In some aspects, the means for receiving and decoding a response from the second apparatus may include the response circuit 1760.

The device 1750 further comprises a header generation circuit 1765. The header generation circuit 1765 may be configured to perform one or more of the functions discussed above with respect to block 1706 illustrated in FIG. 17A. In some aspects, the header generation circuit 1765 may correspond to the processor 204. In some aspects, the means for generating a first header may include the header generation circuit 1765.

The device 1750 further comprises a transmission circuit 1770. The transmission circuit 1770 may be configured to perform one or more of the functions discussed above with respect to block 1708 illustrated in FIG. 17A. In some aspects, the transmission circuit 1770 may correspond to one or more of the processor 204 and/or the transmitter 210. In some aspects, the means for outputting the request and the first header for transmission may include the transmission circuit 1770.

Some aspects of the device 1750 further comprise the header generation circuit 1765 being configured to generate the second header to include second information different from the first information. In some aspects, the header generation circuit 1765 may be further configured to generate the third header without the second information therein. In some aspects, a second header generation circuit and/or a third header generation circuit (not shown) may be configured to generate the second and third headers, respectively. In some aspects, the means for generating the second header and the means for generating the third header may comprise the second header generating circuit and the third header generating circuit, respectively. In some aspects, the second and third header generating circuits may include the processor 204 and/or DSP 420.

In some aspects, the means for outputting the request and the first header for transmission may be further configured to output the second header for transmission. In some aspects, the means for outputting the request and the first header for transmission may be further configured to output the third header for transmission. In some aspects, a second header transmission circuit and/or a third header transmission circuit (not shown) may be configured to transmit the second and third headers, respectively. In some aspects, the means for outputting the second header and the means for outputting the third header may comprise the second header transmission circuit and the third header transmission circuit, respectively. In some aspects, the second and third header transmission circuits may include the processor 204, the transmitter 210, the transceiver 214, and/or DSP 420.

Some aspects of the device 1750 further comprise the header generating circuit 1765 configured to generate the first header to indicate that it does not include the first information. In some aspects, the device 1750 may further comprise a second header generating circuit (not shown) configured to generate the first header to indicate that it does not include the first information. In some aspects, the second header generating circuit may include the processor 204 and/or DSP 420. In some aspects, the means for generating the first header to indicate that it does not include the first information may include the second header generating circuit.

Some aspects of the device 1750 further comprise the request generating circuit 1755 configured to generate the first information to include one or more packet numbers associated with counter mode with cipher block chaining message authentication code protocol (CCMP). In some aspects of the device 1750, the request generating circuit 1755 is configured to generate the first information to include a key identifier associated with counter mode with cipher block chaining message authentication code protocol (CCMP). The request generating circuit 1755 may be further configured to generate first information to include destination address or source address information associated with an MSDU encapsulated in an A-MSDU. In some aspects of the device 1750, the request generating circuit 1755 is configured to generate a request for permission to transmit short A-MSDUs to the second apparatus, wherein the short A-MSDUs do not include source address or destination address fields and to generate a request for permission to transmit both short A-MSDUs and long A-MSDU's to the second apparatus, wherein the short A-MSDUs do not include source address or destination address fields, and the long A-MSDUs do include source address and destination address fields.

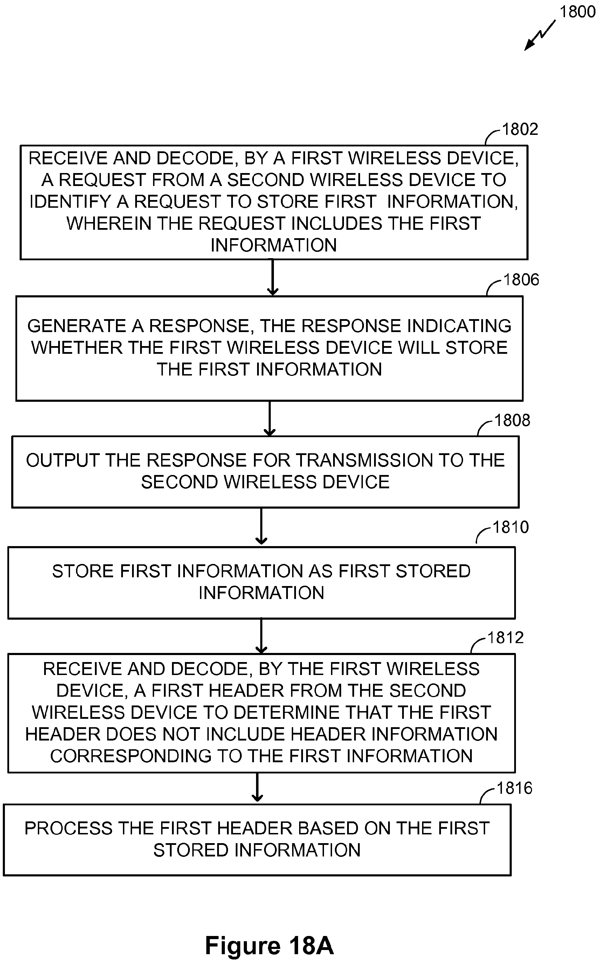

FIG. 18A is a flowchart of a method for wireless communication utilizing compressed headers. In some aspects, the method 1800 may be performed by the device 202. As discussed above, the length of headers can be a significant percentage of wireless network traffic. By compressing headers, utilization of a wireless medium by overhead data, such as MAC headers, may be reduced, allowing for greater transmission of non-overhead data, with a corresponding increase in maximum usable throughput for the media access control medium.

In block 1802, a request is received and decoded by a first wireless device. The request is from a second wireless device. The decoding identifies a request to store first header information. In some aspects, the request may include the first header information. In some aspects, the first header information may include one or more of an A3 field, and/or an A4 field. In some aspects, the request substantially conforms to the format of information element 1100, 1300, 1500, or 1600, discussed above with respect to FIGs. 11-12, 13-14, 15-16, and 16A-16C respectively. For example, the request may indicate a request to store one or more of an A3 or an A4 field specified in the request. The request may further indicate which type of A-MSDU frames will be transmitted by the second wireless device. In some aspects, this is in accordance with the description of field 1275 of information element 1100 discussed above with respect to FIGs. 11-12.

In some aspects, block 1802 includes decoding the request and determining that the request is an association request or a reassociation request. The request may include an information element similar to information elements 1100, 1300, 1500, or 1600, or an information element including portions of one or more of these examples. In some aspects, block 1802 includes decoding the request to identify a request for the first wireless device to store one or more packet numbers associated with counter mode with cipher block chaining message authentication code protocol (CCMP). In some aspects, the request may include the one or more packet numbers. For example, the request may include packet number fields similar to fields 1520-1535 and 1565-1580 illustrated in FIGs. 15-16.

In some aspects, block 1802 includes decoding the request to identify a request that the first wireless device store a key identifier associated with counter mode with cipher block chaining message authentication code protocol (CCMP). For example, the request may include key identifier fields similar to fields 1540 and 1585 illustrated in FIGs. 15-16.

In some aspects, block 1802 includes decoding the request to identify a request that the first wireless device to store destination address or source address information associated with an MSDU encapsulated in an A-MSDU. For example, the request may include a structure substantially in conformance with the information element 1300 described above with respect to FIGS. 13-14.

In some aspects, block 1802 includes decoding the request to identify a request for permission to transmit short A-MSDUs to the first wireless device, wherein sub-frames in a short A-MSDU do not include source address or destination address fields. For example, the request may include a structure substantially in conformance with the information element 1100 or 1600 described above with respect to FIGS. 11-12 or 16A-16C respectively. More specifically, the request may include a structure similar to the A-MSDU type field 1275 or 1675.

In some aspects, block 1802 includes decoding the request to identify a request for permission to transmit both short A-MSDUs and long A-MSDU's to the first wireless device, wherein sub-frames in a short A-MSDU do not include source address or destination address fields, and sub-frames in a long A-MSDU include source address and destination address fields. For example, the request may include a structure substantially in conformance with the information element 1100 or 1600 described above with respect to FIGS. 11-12, and FIGs 16A-16C respectively. More specifically, the request may include a structure similar to the A-MSDU type field 1275 or 1675.

In some aspects, block 1802 further includes determining whether the first header information will be stored. In some aspects, the determination is based on an amount of free memory available in the first wireless device. In some aspects, the determination is based on a configuration setting.

In block 1806, a response is generated. In some aspects, the response is generated to include at least portions of information element 1100, 1300, 1500, or 1600, described above with respect to FIGs. 11-12, 13-14, 15-16, or 16A-16C respectively. The response indicates whether the device will store the first header information. In some aspects, the response is based on the determination discussed with respect to block 1802 above.

In some aspects, the response is generated to further indicate a type of A-MSDUs that may be transmitted to the first wireless device or is processable by the apparatus. If an A-MSDU type is processable by the first wireless device, the first wireless device may accurately and completely decode and process the A-MSDU type. In some aspects, this may be performed in accordance with the description of A-MSDU type fields 1275 or 1675 discussed above with respect to FIGs. 12-13 and 16A-16C. In some aspects, the response may be generated to indicate that A-MSDU's are not processable by the first wireless device and/or may not be transmitted to the first wireless device. For example, the first wireless device may not be able to decode and/or process A-MSDUs for a variety of reasons. The first wireless device may instead indicate that long A-MSDU's are processable and may be transmitted to the first wireless device. In some aspects, the indication can be that only long A-MSDUs may be transmitted to the first wireless device. For example, the first wireless device may not understand how to decode short A-MSDUs. In some aspects, the first wireless device may generate the response to indicate that short A-MSDUs may be transmitted to it. For example, the first wireless device may understand how to properly decode short A-MSDUs. In some of these aspects, the indication may be that only short A-MSDU's may be transmitted to or are processable by to the first wireless device. In other aspects, the first wireless device may generate the response to indicate that both short and long A-MSDUs are processable by it and may be transmitted to it. As discussed above, a short A-MSDU does not include a source address field or a destination address field, and a long A-MSDU does include a source address field and a destination address field.

In block 1808, the response to the second wireless device is output for transmission. In some aspects, outputting for transmission includes transmitting the response to the second wireless device. In some aspects, outputting for transmission includes notifying a hardware or software module or interface that the response is ready for transmission or should be transmitted. For example, in some aspects, notifying the transmitter 210 that the response is ready for transmission encompasses outputting for transmission of the response. In some aspects, outputting for transmission includes signaling over an internal or external interface that the response should be transmitted or is ready for transmission.

In block 1810, the first information is stored as first stored information. For example, the first wireless device may have indicated in the response that it would store the first information. Information included in the response may be stored as first information. For example, one or more of the A3 field 1120, A4 field 1125, da field 1320, sa field 1325, PN fields 1520-1535, key id field 1540, A3 field 1620, A4 field 1625, CCMP Update field 1630 may be stored as first stored information, depending of course on whether the request and/or response included structures similar to one or more of the information elements 1100, 1300, 1500, or 1600. In some aspects, the first stored information includes information identifying the second wireless device. For example, the first wireless device may support storage of information for multiple wireless devices. When a header is received from one of the multiple wireless devices, process 1800 may first identify which, if any, stored information corresponds to the device sending the header. If any stored information is found, it may then be applied to the header if appropriate as described further below.

In block 1812, a first header from the second wireless device is received and decoded by the first wireless device to determine that the first header does not include header information corresponding to the first information. For example, if the request requested that the first wireless device store an A3 or an A4 field of a media access control header, and block 1810 stored values for an A3 field 1120/1620 or an A4 field 1125/1625 as first stored information, block 1812 may decode a media access control header and determine that the A3 field or the A4 field is not included in the decoded header. For example, this determination may be made by decoding an SID field similar to SID field 950 in some aspects.

In block 1816, the first header is processed based on the first stored information. For example, if the first header omits particular header fields that correspond to the first stored information, the first header may be processed as if it included the particular header fields. Specifically, the first stored information may be substituted or used for the omitted header fields of the first header.

In some aspects, the stored information may be updated by a transmitting device by transmitting an additional header that includes information corresponding to the stored information. For example, if particular header fields are stored at the receiver, they may be updated in some aspects by transmission, by the transmitting device, of a new header that includes one or more of the stored header fields. If the receiving device had previously agreed to store information corresponding to the transmitted header fields, the receiving device may update the stored information when it receives the new header including the stored fields. Later, another header may be transmitted to the receiver that again omits the header fields. The receiver will now substitute the new, updated stored information for the omitted header fields.

To provide for updating of header information as described in the above example, process 1800 may determine that the second header includes second header information corresponding to the first information, and store the second header information as second stored information. Process 1800 may then decode a third header from the transmitting device, and determine that the third header does not include header information corresponding to second information, and based on the determining, process the header based on the second stored information.

In some aspects, the decoded header may include explicit indications of information that is omitted. For example, as described above with respect to FIGS. 8, 9A-B, or FIGs. 10A-C, a header may include one or more of an A3 field, A4 field, source address field, destination address field, or a key identifier and/or one or more packet numbers associated with counter mode with cipher block chaining message authentication code protocol (CCMP).are omitted from it. Method 1800 may determine one or more of these fields are missing from the header based on the indication.

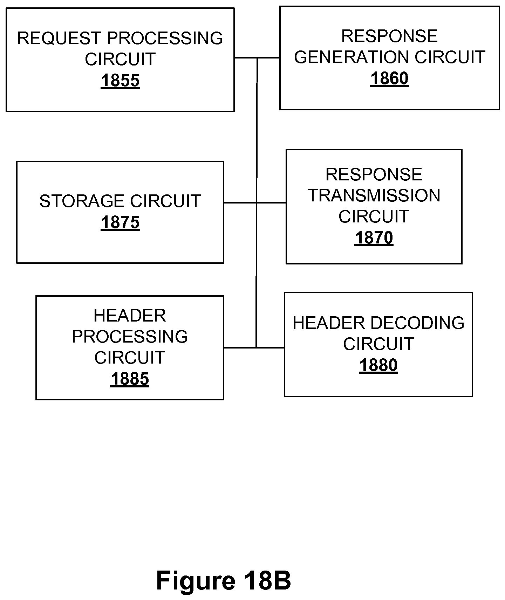

FIG. 18B is a functional block diagram of an exemplary wireless device 1850 that may be employed within the wireless communication system 100. The device 1850 comprises a request processing circuit 1855. The request circuit 1855 may be configured to perform one or more of the functions discussed above with respect to the block 1802 illustrated in FIG. 18A. In some aspects, the request processing circuit 1855 may correspond to the processor 204, the transceiver 214, and/or the receiver 212. In some aspects, the means for receiving and the means for decoding a request from a second apparatus may include the request circuit 1855.

The device 1850 further comprises a response generation circuit 1860. The response generation circuit 1860 may be configured to perform one or more of the functions discussed above with respect to block 1806 illustrated in FIG. 18A. In some aspects, the response generation circuit 1860 may correspond to the processor 204. In some aspects, the means for generating a response indicating whether the first apparatus will store the first information includes the response generation circuit 1860.

The device 1850 further comprises a response transmission circuit 1870. The response transmission circuit 1870 may be configured to perform one or more of the functions discussed above with respect to block 1808 illustrated in FIG. 18A. In some aspects, the response transmission circuit 1870 may correspond to one or more of the processor 204, the transceiver 214, and/or the transmitter 210. In some aspects, the means for outputting the response for transmission to the second apparatus includes the response transmission circuit 1870.

The device 1850 further comprises a storage circuit 1875. The storage circuit 1875 may be configured to perform one or more of the functions discussed above with respect to block 1810 illustrated in FIG. 18A. In some aspects, the storage circuit 1875 may correspond to one or more of the processor 204 and/or the memory 206. In some aspects, the means for storing first information as first stored information may include the storage circuit 1875.

The device 1850 further comprises a header decoding circuit 1880. The header decoding circuit 1880 may be configured to perform one or more of the functions discussed above with respect to block 1812 illustrated in FIG. 18A. In some aspects, the header decoding circuit 1880 may correspond to one or more of the processor 204 and/or the receiver 212. In some aspects, the means for decoding a first header from the second apparatus includes the header decoding circuit 1880. In some aspects, the means for determining that the first header does not include header information corresponding to first information also includes the header decoding circuit 1880. In some aspects, the device 1850 may further comprise a determining circuit (not shown) configured to determine that the first header does not include header information corresponding to first information. In some aspects, the determining circuit may comprise one or more of the processor 204 or the DSP 240. In some aspects, the means for determining that the first header does not include header information corresponding to first information includes the determining circuit.

The device 1850 further comprises a header processing circuit 1885. The header processing circuit 1885 may be configured to perform one or more of the functions discussed above with respect to block 1816 illustrated in FIG. 18A. In some aspects, the header processing circuit 1885 may correspond to one or more of the processor 204, the transceiver 214, the DSP 240, and/or the receiver 212. In some aspects, the means for processing the first header based on the first stored information includes the header processing circuit 1885.

Some aspects of the device 1850 further comprise the response generating circuit 1860 configured to generate the response to comprise at least one bit indicating a type of A-MSDU that is processable by the apparatus. In some aspects of the device 1850, the response generating circuit 1860 is configured to set the at least one bit in the response indicating a type of A-MSDU to a value indicating one of short A-MSDU, long A-MSDU, and short or long A-MSDU, wherein a short A-MSDU does not include a source address field or a destination address field, and a long A-MSDU does include a source address field and a destination address field.

It is to be understood that the methods and techniques discussed above can also be employed for other types of frames without departing from the scope of the invention. For example, the methods and techniques discussed above can also be used for management/controls frames (e.g., RTS/CTS frames).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of' a list of items refers to any combination of those items, including single members. As an example, "at least one of: A, B, *or* C" is intended to cover: A or B or C or A and B or A and C or B and C or A, B, and C or 2A or 2B or 2C and so on.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

As used herein, the term interface may refer to hardware or software configured to connect two or more devices together. For example, an interface may be a part of a processor or a bus and may be configured to allow communication of information or data between the devices. The interface may be integrated into a chip or other device. For example, in some aspects, an interface may comprise a receiver configured to receive information or communications from a device at another device. The interface (e.g., of a processor or a bus) may receive information or data processed by a front end or another device or may process information received. In some aspects, an interface may comprise a transmitter configured to transmit or communicate information or data to another device. Thus, the interface may transmit information or data or may prepare information or data for outputting for transmission (e.g., via a bus).

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

## Claims

**1.** A first apparatus for wireless communication, comprising:

a processing system configured to:

generate a request for a second apparatus to store first header information, wherein the request comprises the first header information;
receive a response from the second apparatus;
decode the response from the second apparatus to determine whether the second apparatus will store the first header information; and
generate a first header, the first header being generated without the first header information therein if the second apparatus will store the first header information; and

an interface for outputting the request and the first header for transmission to the second apparatus;
wherein the first header information of the request comprises at least one of a first field (1320) or a second field (1325) and wherein the at least one of the first field or the second field comprises a source address or a destination address associated with the first header, and wherein the request further comprises at least one of a store first field indication (1465) or a store second field indication (1470), wherein the store first field indication is set to 1 to request the second apparatus to store the first field (1320) and wherein the store second field indication is set to 1 to request the second apparatus to store the second field (1325).

**2.** The first apparatus of claim 1, wherein the processing system is further configured to generate a second header to include second header information, wherein the second header information is different than the first header information, and generate a third header without the second header information, and wherein the interface is further configured to output the second and third headers for transmission to the second apparatus.

3. The first apparatus of claim 1, wherein the processing system is further configured to generate the first header to indicate to the second apparatus that the first header does not include the first header information.

4. The first apparatus of claim 1, wherein the first header information comprises one or more packet numbers associated with a counter cipher mode with a block chaining message authentication code protocol ,CCMP, header.

5. The first apparatus of claim 1, wherein the first header information comprises a key identifier associated with a counter mode with cipher block chaining message authentication code protocol ,CCMP, header.

6. The first apparatus of claim 1, wherein the first header information comprises destination address or source address information associated with a MAC service data unit, MSDU, encapsulated in an aggregate MSDU ,A-MSDU.

7. The first apparatus of claim 1, wherein the request is generated to further request permission to transmit a first A-MSDU to the second apparatus, wherein the first A-MSDU does not include source address fields or destination address fields.

8. The first apparatus of claim 7, wherein the request is generated to further request permission to transmit both a first A-MSDU and a second A-MSDU to the second apparatus, wherein the first A-MSDU does not include source address fields or destination address fields and the second A-MSDU does include source address fields and destination address fields.

9. A method for wireless communication, comprising:

generating and outputting for transmission, by a first wireless device, a request for a second wireless device to store first header information, wherein the request comprises the first header information;
receiving a response from the second wireless device;
decoding the response from the second wireless device to determine whether the second wireless device will store the first header information;
generating a first header, the first header generated without the first header information therein if the second wireless device will store the first header information; and
outputting the first header for transmission to the second wireless device;
wherein the first header information of the request comprises at least one of a first field (1320) or a second field (1325) and wherein the at least one of the first field or the second field comprises a source address or a destination address associated with the first header, and wherein the request further comprises at least one of a store first field indicator (1465) or a store second field indicator (1470), wherein the store first field indicator is set to 1 to request the second apparatus to store the first field (1320) and wherein the store second field indicator is set to 1 to request the second apparatus to store the second field (1325).

10. A first apparatus for wireless communication comprising:

a processing system configured to:

receive a request from a second apparatus, wherein the request comprises first header information;
decode the request from the second apparatus to identify a request to store the first header information; and

generate a response indicating whether the first apparatus will store the first header information;

store the first header information as first stored header information,
receive a first header from the second apparatus;
determine that the first header does not include header information corresponding to the first header information; and
if the first header does not include the corresponding header information, process the first header based on the first stored header information; and

an interface for outputting the response for transmission to the second apparatus;
wherein the first header information of the request comprises at least one of a first field (1320) or a second field (1325) and wherein the at least one of the first field or the second field comprises a source address or a destination address associated with the first header, and wherein the request further comprises at least one of a store first field indicator (1465) or a store second field indicator (1470), wherein the store first field indicator is set to 1 to request the first apparatus to store the first field (1320) and wherein the store second field indicator is set to 1 to request the first apparatus to store the second field (1325).

**11.** The first apparatus of claim 10, wherein the processing system is further configured to:

receive a second header from the second apparatus;
decode the second header from the second apparatus;
determine that the second header includes second header information corresponding to the first header information;
store the second header information as second stored header information;
receive a third header from the second apparatus;
decode the third header from the second apparatus;
determine that the third header does not include header information corresponding to the second header information; and
process the third header based on the second stored header information.

**12.** The first apparatus of claim 10, wherein the response is generated to comprise at least one bit indicating a type of A-MSDU that is processable by the apparatus.

**13.** The first apparatus of claim 12, wherein the processing system is further configured to set the at least one bit in the response indicating a type of A-MSDU to a value indicating one of a first A-MSDU, a second A-MSDU, or the first and the second A-MSDU, wherein the first A-MSDU does not include a source address field or a destination address field, and the second A-MSDU does include a source address field or a destination address field.

**14.** A method for wireless communication, comprising:

receiving, by a first wireless device, a request from a second wireless device, wherein the request comprises first header information;
decoding, by the first wireless device, the request from the second wireless device to store the first header information;
generating a response indicating whether the first wireless device will store the first header information;
outputting the response for transmission to the second wireless device;
storing the first header information as first stored header information;
receiving, by the first wireless device, a first header from the second wireless device;
determining that the first header does not include header information corresponding to the first header information; and
if the first header does not include the corresponding header information,
processing the first header based on the first stored header information;
wherein the first header information of the request comprises at least one of a first field (1320) or a second field (1325) and wherein the at least one of the first field or the second field comprises a source address or a destination address associated with the first header, and wherein the request further comprises at least one of a store first field indicator (1465) or a store second field indicator (1470), wherein the store first field indicator is set to 1 to request the first wireless device to store the first field (1320) and wherein the store second field indicator is set to 1 to request the first wireless device to store the second field (1325).

**15.** A computer program product comprising a computer readable medium encoded thereon with instructions that when executed cause a processor to carry out the method steps of any of claims 9 and 14.

## Patentansprüche

**1.** Eine erste Vorrichtung für Drahtloskommunikationen, die Folgendes aufweist:

ein Verarbeitungssystem, das konfiguriert ist zum:

Generieren einer Anfrage für eine zweite Vorrichtung zum Speichern von erster Header-Information, wobei die Anfrage die erste Header-Information aufweist;

Empfangen einer Antwort von der zweiten Vorrichtung;
Decodieren der Antwort von der zweiten Vorrichtung zum Bestimmen, ob die zweite Vorrichtung die erste Header-Information speichern wird; und
Generieren eines ersten Headers, wobei der erste Header ohne die erste Header-Information darin generiert wird, wenn die zweite Vorrichtung die erste Header-Information speichern wird; und

eine Schnittstelle zum Ausgeben der Anfrage und des ersten Headers zur Sendung an die zweite Vorrichtung; wobei die erste Header-Information der Anfrage ein erstes Feld (1320) und/oder ein zweites Feld (1325) aufweist, und wobei das erste Feld und/oder das zweite Feld eine Quellenadresse oder eine Zieladresse aufweisen, die mit dem ersten Header assoziiert ist, und wobei die Anfrage weiter eine Anzeige (1465) zum Speichern des ersten Feldes und/oder eine Anzeige (1470) zum Speichern des zweiten Feldes aufweist, wobei die Anzeige zum Speichern des ersten Feldes auf 1 gesetzt ist, um die zweite Vorrichtung anzufragen, das erste Feld (1320) zu speichern und wobei die Anzeige zum Speichern des zweiten Feldes auf 1 gesetzt ist um die zweite Vorrichtung anzufragen, das zweite Feld (1325) zu speichern.

**2.** Erste Vorrichtung nach Anspruch 1, wobei das Verarbeitungssystem weiter konfiguriert ist zum Generieren eines zweiten Headers, so dass er zweite Header-Information aufweist, wobei sich die zweite Header-Information von der ersten Header-Information unterscheidet, und Generieren eines dritten Headers ohne die zweite Header-Information, und wobei die Schnittstelle weiter konfiguriert ist zum Ausgeben der zweiten und dritten Header zur Sendung an die zweite Vorrichtung.

**3.** Erste Vorrichtung nach Anspruch 1, wobei das Verarbeitungssystem weiter konfiguriert ist zum Generieren des ersten Headers, so dass er der zweiten Vorrichtung anzeigt, dass der erste Header die erste Header-Information nicht aufweist.

**4.** Erste Vorrichtung nach Anspruch 1, wobei die erste Header-Information ein oder mehrere Paketnummern aufweist, die mit einem Header eines Zählerverschlüsselungsmodus mit Blockchaining-Nachrichtenauthentifizierungscodeprotokoll bzw. einem CCMP-Header (CCMP = counter mode with cipher block chaining message authentication code protocol) assoziiert sind.

**5.** Erste Vorrichtung nach Anspruch 1, wobei die erste Header-Information einen Schlüsselidentifikator aufweist, der mit einem Header eines Zählerverschlüsselungsmodus mit Blockchaining-Nachrichtenauthentifizierungscodeprotokoll bzw. einem CCMP-Header assoziiert ist.

**6.** Erste Vorrichtung nach Anspruch 1, wobei die erste Header-Information Zieladress- oder Quellenadressinformation aufweist, die mit einer MAC-Dienstdateneinheit bzw. MSDU (MSDU = MAC service data unit) assoziiert ist, die in eine aggregierte MSDU bzw. A-MSDU (A-MSDU = aggregate MSDU) eingekapselt ist.

**7.** Erste Vorrichtung nach Anspruch 1, wobei die Anfrage generiert wird um weiter eine Erlaubnis zum Senden einer ersten A-MSDU an die zweite Vorrichtung anzufragen, wobei die erste A-MSDU keine Quellenadressfelder oder Zieladressfelder aufweist.

**8.** Erste Vorrichtung nach Anspruch 7, wobei die Anfrage generiert wird um weiter eine Erlaubnis zum Senden von sowohl einer ersten A-MSDU als auch einer zweiten A-MSDU an die zweite Vorrichtung anzufragen, wobei die erste A-MSDU keine Quellenadressfelder oder Zieladressfelder aufweist und die zweite A-MSDU Quellenadressfelder und Zieladressfelder aufweist.

**9.** Ein Verfahren zur Drahtloskommunikationen, das Folgendes aufweist:

Generieren und Ausgeben zur Sendung, durch eine erste Drahtloseinrichtung, einer Anfrage für eine zweite Drahtloseinrichtung zum Speichern von erster Header-Information, wobei die Anfrage die erste Header-Information aufweist;
Empfangen einer Antwort von der zweiten Drahtloseinrichtung;
Decodieren der Antwort von der zweiten Drahtloseinrichtung zum Bestimmen, ob die zweite Drahtloseinrichtung die erste Header-Information speichern wird;
Generieren eines ersten Headers, wobei der erste Header ohne die erste Header-Information darin generiert wird, wenn die zweite Drahtloseinrichtung die erste Header-Information speichern wird; und
Ausgeben des ersten Headers zur Sendung an die zweite Drahtloseinrichtung;

wobei die erste Header-Information der Anfrage ein erstes Feld (1320) und/oder ein zweites Feld (1325) aufweist, und wobei das erste Feld und/oder das zweite Feld eine Quellenadresse oder eine Zieladresse aufweist, die mit dem ersten Header assoziiert ist, und wobei die Anfrage weiter
ein Anzeigeelement bzw. einen Indikator (1465) zum Speichern des ersten Feldes und/oder einen Indikator (1470) zum Speichern des zweiten Feldes aufweist,
wobei der Indikator zum Speichern des ersten Feldes auf 1 gesetzt ist um die zweite Vorrichtung anzufragen, das erste Feld (1320) zu speichern und wobei der Indikator zum Speichern des zweiten Feldes auf 1 gesetzt ist um die zweite Vorrichtung anzufragen, das zweite Feld (1325) zu speichern.

**10.** Eine erste Vorrichtung zur Drahtloskommunikation, die Folgendes aufweist:

ein Verarbeitungssystem, das konfiguriert ist zum:

Empfangen einer Anfrage von einer zweiten Vorrichtung, wobei die Anfrage erste Header-Information aufweist;
Decodieren der Anfrage von der zweiten Vorrichtung zum Identifizieren einer Anfrage zum Speichern der ersten Header-Information; und
Generieren einer Antwort die anzeigt, ob die erste Vorrichtung die erste Header-Information speichern wird;
Speichern der ersten Header-Information als erste gespeicherte Header-Information,
Empfangen eines ersten Headers von der zweiten Vorrichtung;
Bestimmen, dass der erste Header keine Header-Information aufweist, die der ersten Header-Information entspricht; und
wenn der erste Header keine entsprechende Header-Information aufweist, Verarbeiten des ersten Headers basierend auf der ersten gespeicherten Header-Information; und

eine Schnittstelle zum Ausgeben der Antwort zur Sendung an die zweite Vorrichtung;
wobei die erste Header-Information der Anfrage ein erstes Feld (1320) und/oder ein zweites Feld (1325) aufweist und wobei das erste Feld und/oder das zweite Feld eine Quellenadresse oder eine Zieladresse aufweist, die mit dem ersten Header assoziiert sind, und wobei die Anfrage weiter wenigstens ein Anzeigeelement bzw. einen Indikator (1465) zum Speichern des ersten Feldes und/oder einen Indikator (1470) zum Speichern des zweiten Feldes aufweist, wobei der Indikator zum Speichern des ersten Feldes auf 1 gesetzt ist um die erste Vorrichtung anzufragen, das erste Feld (1320) zu speichern und wobei der Indikator zum Speichern des zweiten Feldes auf 1 gesetzt ist, um die erste Vorrichtung anzufragen, das zweite Feld (1325) zu speichern.

**11.** Vorrichtung nach Anspruch 10, wobei das Verarbeitungssystem weiter konfiguriert ist zum:

Empfangen eines zweiten Headers von der zweiten Vorrichtung;
Decodieren des zweiten Headers von der zweiten Vorrichtung;
Bestimmen, dass der zweite Header zweite Header-Information aufweist, die der ersten Header-Information entspricht;
Speichern der zweiten Header-Information als zweite gespeicherte Header-Information;
Empfangen eines dritten Headers von der zweiten Vorrichtung;
Decodieren des dritten Headers von der zweiten Vorrichtung;
Bestimmen, dass der dritte Header keine Header-Information aufweist, die der zweiten Header-Information entspricht; und
Verarbeiten des dritten Headers basierend auf der zweiten gespeicherten Header-Information.

**12.** Erste Vorrichtung nach Anspruch 10, wobei die Antwort so generiert wird, dass sie wenigstens 1 Bit aufweist, das einen Typ einer A-MSDU anzeigt, die durch die Vorrichtung verarbeitet werden kann.

**13.** Erste Vorrichtung nach Anspruch 12, wobei das Verarbeitungssystem weiter konfiguriert ist zum Einstellen des wenigstens einen Bits in der Antwort, das einen Typ einer A-MSDU anzeigt, auf einen Wert, der eine erste A-MSDU, eine zweite A-MSDU oder die erste und die zweite A-MSDU anzeigt, wobei die erste A-MSDU kein Quellenadressfeld oder Zieladressfeld aufweist, und die zweite A-MSDU ein Quellenadressfeld oder ein Zieladressfeld aufweist.

**14.** Ein Verfahren für Drahtloskommunikationen, das Folgendes aufweist:

Empfangen, durch eine erste Drahtloseinrichtung, einer Anfrage von einer zweiten Drahtloseinrichtung, wobei die Anfrage erste Header-Information aufweist;
Decodieren, durch die erste Drahtloseinrichtung, der Anfrage von der zweiten Drahtloseinrichtung zum Speichern der ersten Header-Information;
Generieren einer Antwort die anzeigt, ob die erste Drahtloseinrichtung die erste Header-Information speichern wird;
Ausgeben der Antwort zur Sendung an die zweite Drahtloseinrichtung;
Speichern der ersten Header-Information als erste gespeicherte Header-Information;
Empfangen, durch die erste Drahtloseinrichtung, eines ersten Headers von der zweiten Drahtloseinrichtung;
Bestimmen, dass der erste Header keine Header-Information aufweist, die der ersten Header-Information entspricht; und
wenn der erste Header keine entsprechende Header-Information aufweist,
Verarbeiten des ersten Headers basierend auf der ersten gespeicherten Header-Information;
wobei die erste Header-Information der Anfrage ein erstes Feld (1320) und/oder ein zweites Feld (1325) aufweist und wobei das das erste Feld und/ oder das zweite Feld eine Quellenadresse oder eine Zieladresse aufweisen, die mit dem ersten Header assoziiert ist, und wobei die Anfrage weiter ein Anzeigeelement bzw. einen Indikator (1465) zum Speichern des ersten Feldes und/oder einen Indikator (1470) zum Speichern des zweiten Feldes aufweist, wobei der Indikator zum Speichern des ersten Feldes auf 1 gesetzt ist, um die erste Drahtloseinrichtung anzufragen, das erste Feld (1320) zu speichern und wobei der Indikator zum Speichern des zweiten Feldes auf 1 gesetzt ist um die erste Drahtloseinrichtung anzufragen, das zweite Feld (1325) zu speichern.

**15.** Ein Computerprogrammprodukt, das ein computerlesbares Medium aufweist, das darauf mit Instruktionen codiert ist, die, wenn sie ausgeführt werden, einen Prozessor veranlassen zum Durchführen der Verfahrensschritte nach einem der Ansprüche 9 und 14.

## Revendications

**1.** Premier dispositif pour des communications sans fil, comprenant :

un système de traitement agencé pour :

générer une requête pour qu'un deuxième dispositif mémorise des premières informations d'en-tête, la requête comprenant les premières informations d'en-tête ;
recevoir une réponse du deuxième dispositif ;
décoder la réponse du deuxième dispositif pour déterminer si le deuxième dispositif va mémoriser les premières informations d'en-tête ; et
générer un premier en-tête, le premier en-tête étant généré sans les premières informations d'en-tête dedans si le deuxième dispositif va mémoriser les premières informations d'en-tête ; et

une interface pour fournir en sortie la requête et le premier en-tête pour transmission au deuxième dispositif ;
dans lequel les premières informations d'en-tête de la requête comprennent au moins l'un d'un premier champ (1320) ou d'un deuxième champ (1325) et dans lequel ledit au moins l'un du premier champ et du deuxième champ comprend une adresse de source ou une adresse de destination associée au premier en-tête, et dans lequel la requête comprend en outre au moins l'une d'une indication de mémorisation de premier champ (1465) ou d'une indication de mémorisation de deuxième champ (1470), l'indication de mémorisation de premier champ étant mise à 1 pour demander au deuxième dispositif de mémoriser le premier champ (1320) et l'indication de mémorisation de deuxième champ étant mise à 1 pour demander au deuxième dispositif de mémoriser le deuxième champ (1325).

**2.** Premier dispositif selon la revendication 1, dans lequel le système de traitement est en outre agencé pour générer un deuxième en-tête destiné à inclure des deuxièmes informations d'en-tête, les deuxièmes informations d'en-tête étant différentes des premières informations d'en-tête, et générer un troisième en-tête sans les deuxièmes informations d'en-tête, et dans lequel l'interface est en outre agencée pour fournir en sortie les deuxième et troisième en-têtes pour transmission au deuxième dispositif.

**3.** Premier dispositif selon la revendication 1, dans lequel le système de traitement est en outre agencé pour générer le premier en-tête pour indiquer au deuxième dispositif que le premier en-tête n'inclut pas les premières informations d'en-tête.

4. Premier dispositif selon la revendication 1, dans lequel les premières informations d'en-tête comprennent un ou plusieurs numéros de paquets associés à un mode de chiffrement de compteur avec un en-tête de protocole de code d'authentification de message de chaînage de blocs, CCMP.

5. Premier dispositif selon la revendication 1, dans lequel les premières informations d'en-tête comprennent un identificateur de clé associé à un mode de compteur avec un en-tête de protocole de code d'authentification de message de chaînage de blocs à chiffrement, CCMP.

6. Premier dispositif selon la revendication 1, dans lequel les premières informations d'en-tête comprennent des informations d'adresse de destination et d'adresse de source associées à une unité de données de service MAC, MSDU, encapsulée dans un MSDU agrégé, A-MSDU.

7. Premier dispositif selon la revendication 1, dans lequel la requête est générée pour demander en outre la permission de transmettre un premier A-MSDU au deuxième dispositif, le premier A-MSDU ne comprenant pas de champ d'adresse de source ou de champ d'adresse de destination.

8. Premier dispositif selon la revendication 7, dans lequel la requête est générée pour demander en outre la permission de transmettre à la fois un premier A-MSDU et un deuxième A-MSDU au deuxième dispositif, le premier A-MSDU ne comprenant pas de champs d'adresse de source ou de champs d'adresse de destination et le deuxième A-MSDU ne comprenant pas de champs d'adresse de source et de champs d'adresse de destination.

9. Procédé de communication sans fil, comprenant :

générer et fournir pour transmission, par un premier dispositif sans fil, une requête pour qu'un deuxième dispositif sans fil mémorise des premières informations d'en-tête, la requête comprenant les premières informations d'en-tête ;
recevoir une réponse du deuxième dispositif sans fil ;
décoder la réponse du deuxième dispositif sans fil pour déterminer si le deuxième dispositif sans fil va mémoriser les premières informations d'en-tête ;
générer un premier en-tête, le premier en-tête étant généré sans les premières informations d'en-tête dedans si le deuxième dispositif sans fil va mémoriser les premières informations d'en-tête ;
fournir le premier en-tête pour transmission au deuxième dispositif sans fil ;
dans lequel les premières informations d'en-tête de la requête comprennent au moins l'un d'un premier champ (1320) ou d'un deuxième champ (1325) et dans lequel ledit au moins l'un du premier champ ou du deuxième champ comprend une adresse de source ou une adresse de destination associée au premier en-tête, et dans lequel la requête comprend en outre au moins l'un d'un indicateur de mémorisation de premier champ (1465) ou d'un indicateur de mémorisation de deuxième champ (1470), l'indicateur de mémorisation de premier champ étant mis à 1 pour demander au deuxième dispositif de mémoriser le premier champ (1320) et l'indicateur de mémorisation de deuxième champ étant mis à 1 pour demander au deuxième dispositif de mémoriser le deuxième champ (1325).

10. Premier dispositif pour des communications sans fil comprenant :

un système de traitement agencé pour :

recevoir une requête d'un deuxième dispositif, la requête comprenant des premières informations d'en-tête ;
décoder la requête du deuxième dispositif pour identifier une requête pour mémoriser les premières informations d'en-tête ; et
générer une réponse indiquant si le premier dispositif va mémoriser les premières informations d'en-tête ;
mémoriser les premières informations d'en-tête comme premières informations d'en-tête mémorisées,
recevoir un premier en-tête à partir du deuxième dispositif ;
déterminer que le premier en-tête ne comprend pas d'informations d'en-tête correspondant aux premières informations d'en-tête ; et
si le premier en-tête ne comprend pas les informations d'en-tête correspondantes, traiter le premier en-tête sur la base des premières informations d'en-tête mémorisées ; et

une interface pour fournir en sortie la réponse pour transmission au deuxième dispositif ;
dans lequel les premières informations d'en-tête de la requête comprennent au moins l'un d'un premier champ (1320) ou d'un deuxième champ (1325) et dans lequel ledit au moins l'un du premier champ ou du deuxième champ comprend une adresse de source ou une adresse de destination associée au premier en-tête, et dans lequel la requête comprend en outre au moins l'un d'un indicateur de mémorisation de premier champ (1465) ou d'un indicateur de mémorisation de deuxième champ (1470), l'indicateur de mémorisation de premier champ étant mis à 1 pour demander au premier dispositif de mémoriser le premier champ (1320) et l'indicateur de mémorisation de deuxième champ étant mis à 1 pour demander au premier dispositif de mémoriser le deuxième champ (1325).

**11.** Premier dispositif selon la revendication 10, dans lequel le système de traitement est en outre agencé pour :

recevoir un deuxième en-tête à partir du deuxième dispositif ;
décoder le deuxième en-tête provenant du deuxième dispositif ;
déterminer que le deuxième en-tête comprend des deuxièmes informations d'en-tête correspondant aux premières informations d'en-tête ;
mémoriser les deuxièmes informations d'en-tête comme deuxième informations d'en-tête mémorisées ;
recevoir un troisième en-tête du deuxième dispositif ;
décoder le troisième en-tête provenant du deuxième dispositif ;
déterminer que le troisième en-tête ne comprend pas d'informations d'en-tête correspondant aux deuxièmes informations d'en-tête ; et
traiter le troisième en-tête sur la base des deuxièmes informations d'en-tête mémorisées.

**12.** Premier dispositif selon la revendication 10, dans lequel la réponse est générée de manière à comprendre au moins un bit indiquant un type de A-MSDU qui peut être traité par le dispositif.

**13.** Premier dispositif selon la revendication 12, dans lequel le système de traitement est en outre agencé pour mettre ledit au moins un bit dans la réponse indiquant un type de A-MSDU à une valeur indiquant l'un d'un premier A-MSDU, d'un deuxième A-MSDU, ou du premier et du deuxième A-MSDU, dans lequel le premier A-MSDU ne comprend pas de champ d'adresse de source ou de champ d'adresse de destination, et le deuxième A-MSDU ne comprend pas de champ d'adresse de source ou de champ d'adresse de destination.

**14.** Procédé de communication sans fil, comprenant :

recevoir, par un premier dispositif sans fil, une requête provenant d'un deuxième dispositif sans fil, la requête comprenant des premières informations d'en-tête ;
décoder, par le premier dispositif sans fil, la requête provenant du deuxième dispositif sans fil pour mémoriser les premières informations d'en-tête ;
générer une réponse indiquant si le premier dispositif sans fil va mémoriser les premières informations d'en-tête ;
fournir la réponse pour transmission au deuxième dispositif sans fil ;
mémoriser les premières informations d'en-tête comme premières informations d'en-tête mémorisées ;
recevoir, par le premier dispositif sans fil, un premier en-tête à partir du deuxième dispositif sans fil ;
déterminer que le premier en-tête ne comprend pas d'informations d'en-tête correspondant aux premières informations d'en-tête ; et
si le premier en-tête ne comprend pas les informations d'en-tête correspondantes,
traiter le premier en-tête sur la base des premières informations d'en-tête mémorisées ;
dans lequel les premières informations d'en-tête de la requête comprennent au moins l'un d'un premier champ (1320) ou d'un deuxième champ (1325) et dans lequel ledit au moins l'un du premier champ ou du deuxième champ comprend une adresse de source ou une adresse de destination associée au premier en-tête, et dans lequel la requête comprend en outre au moins l'un d'un indicateur de mémorisation de premier champ (1465) ou d'un indicateur de mémorisation de deuxième champ (1470),
dans lequel l'indicateur de mémorisation de premier champ est mis à 1 pour demander au premier dispositif sans fil de mémoriser le premier champ (1320) et dans lequel l'indicateur de mémorisation de deuxième champ est mis à 1 pour demander au premier dispositif sans fil de mémoriser le deuxième champ (1325) .

**15.** Produit programme d'ordinateur comprenant un support lisible par un ordinateur codé avec des instructions qui, lorsqu'elles sont exécutées, amènent un processeur à réaliser les étapes de procédé de l'une quelconque des revendications 9 et 14.

100
102
104
108
106
106
110

FIG. 1

216
208
WIRELESS DEVICE
202
214
210
TRANSMITTER
212
RECEIVER
220
DSP
204
PROCESSOR
206
MEMORY
218
SIGNAL DETECTOR
226
USER INTERFACE
222

FIG. 2

300
Octets: 2
2
6
6
6
2
2
Frame Control
Duration /ID
Address 1
Address 2
Address 3
Sequence Control
QoS
305
310
315
320
325
330
335

FIG. 3

300a

| Field Name | Size in Octets | Field Description |
|---|---|---|
| fc | 2 | frame control |
| dur | 2 | duration/id |
| a1 | 6 | receiver address |
| a2 | 6 | transmitter address |
| a3 | 6 | destination address |
| sc | 2 | sequence control |
| qc | 2 | quality of service control |
| htc | 4 | header type control |
| ccmp | 8 | counter-mode/cbc-mac protocol |
| llc/snap | 8 | logical link control/subnetwork access protocol |
| mic | 8 | message integrity check |
| fcs | 4 | frame control sequence |
| **TOTAL SIZE:** | 58 | |

305a 310a 315a 320a 325a 330a 335a 340a 345a 350a 360a 365a

| Field Name | Size in Bits | Field Description |
|---|---|---|
| pv | 2 | protocol version |
| type | 2 | frame type |
| subtype | 4 | frame subtype |
| to-ds | 1 | to distribution system |
| from-ds | 1 | from distribution system |
| more frag | 1 | more fragments |
| retry | 1 | retry |
| pm | 1 | power management |
| md | 1 | more data |
| pf | 1 | protected frame |
| order | 1 | order |
| **TOTAL SIZE:** | 16 | |

372 374 376 378 380 382 384 386 388 390 392

305a

FIG. 3A

305a
bits 2
Protocol version
372
2
Type
374
4
Subtype
376
1
To DS
378
1
From DS
380
1
More Frag
382
1
Retry
384
1
Pwr Mgt
386
1
More Data
388
1
Protected Frame
390
1
Order
392

FIG. 3B

400
2
2/6
6/2
2
Frame Control
Address 1
Address 2
Sequence Control
405
415
420
430

FIG. 4

| Data 415 420 | | | | | ACK |
|---|---|---|---|---|---|
| Direction | To-DS/ From-DS | A1 (Rx) | A2 (Tx) | A3 (SA/DA) | A1 (Rx) |
| DL | 01 | AID | BSSID | (SA) | pBSSID |
| UL | 10 | BSSID | AID | (DA) | AID |
| Direct | 00 | RA | AID | | AID |

FIG. 4A

500
CCMP Nonce
510
Nonce Flags
1B
520
A2
530
PN
Nonce Flags
540
Priority
4b
550
Management
1b
560
Reserved
3b

FIG. 5

600
CCMP Nonce
610
620
630
Nonce Flags
A2
PN
1B
6B
6B
Nonce Flags with PV1 indication
640
650
655
660
Priority
Management
PV1
Reserved
4h
1h
1h
2h

FIG. 6

700
710
MAINTAIN A FIRST SET OF REPLAY COUNTERS ASSOCIATED WITH A FIRST PROTOCOL VERSION IN A WIRELESS SYSTEM
720
MAINTAIN A SECOND SET OF REPLAY COUNTERS ASSOCIATED WITH A SECOND PROTOCOL VERSION IN THE WIRELESS SYSTEM
730
RECEIVE A PACKET COMPRISING A PROTOCOL VERSION INDICATION
740
SELECT A REPLAY COUNTER FROM ONE OF THE FIRST AND SECOND SETS OF REPLAY COUNTERS BASED AT LEAST IN PART ON THE PROTOCOL VERSION INDICATION
750
APPLY THE SELECTED REPLAY COUNTER TO THE PACKET

**FIG. 7**

800
805
810
815
820
825
830
835
840
Frame Control
A1
A2
Sequence Control
A3
A4
Frame Body
FCS
Octets
2
2/6
6/2
2
6
6
variable
4

FIG. 8

805a
bits 2
4
1
1
1
1
1
1
4
Protocol Version
Type
From DS
More Fragments
Power Management
More Data
Protected Frame
EOSP
Reserved
902c
904c
906c
908c
910c
912c
914c
916c
920c
950
bits 13
1
1
1
Association ID (AID)
A3 Present
A4 Present
A-MSDU
952
954
956
958

FIG. 9A

FIG. 9B

1000
1005a
1005b
1005c
Dynamic A-MSDU subframe 1
Dynamic A-MSDU subframe 1
...
Dynamic A-MSDU subframe n
1005
Octets
2
6
6
0..2034
0..3
Subframe Control
DA (optional)
SA (optional)
MSDU
Padding
1006
1010
1015
1020
1025
1006
Bits
B0
B13
B14
B15
Length
DA Present
SA Present
1030
1040
1050

FIG. 10A

FIG. 10B

FIG. 10C

1100
1105
1110
1115
1120
1125
Element ID
Length
Header Compression Control
A3 (optional)
A4 (optional)
Octets
1
1
1
0 or 6
0 or 6
1115
1255
1260
1265
1270
1275
1280
Request Type
Data Type
Store A3
Store A4
A-MSDU Type
Reserved
Bits
1
1
1
1
2
2

FIG. 11

FIG. 12

1300
1305
1310
1315
1320
1325
Element ID
Length
Header Compression Control
DA (optional)
SA (optional)
Octets
1
1
1
0 or 6
0 or 6
1315
1455
1460
1465
1470
1480
Request Type
Data Type
Store DA
Store SA
Reserved
Bits
1
1
1
1
4

FIG. 13

FIG. 14

1500
Element ID
Length
Header Compression Control
PN2 (optional)
PN3 (optional)
PN4 (optional)
PN5 (optional)
Key ID (optional)
1505
1510
1515
1520
1525
1530
1535
1540
Octets
1
1
1
0 or 1
0 or 1
0 or 1
0 or 1
0 or 1
1515
Request Type
Data Type
Store PN2
Store PN3
Store PN4
Store PN5
Store Key ID
Reserved
1555
1560
1565
1570
1575
1580
1585
1590
Bits
1
1
1
1
1
1
1
1

FIG. 15

FIG. 16

1600
1605
1610
1615
1620
1625
1630
Element ID
Length
Header Compression Control
A3 (optional)
A4 (optional)
CCMP Update (optional)
Octets
1
1
1
0 or 6
0 or 6
0 or 5
1615
1655
1665
1670
1675
1680
1685
Request Type
Store A3
Store A4
A-MSDU Type
CCMP Update Present
Reserved
Bits
1
1
1
2
1
2
1630
1680a
1680b
1680c
1680d
1680e
1680f
1680g
PN2
PN3
PN4
PN5
Key ID
TID
Reserved
Bits
8
8
8
8
2
4
2

FIG. 16A

FIG. 16B

FIG. 16C

1700
1702
GENERATE, BY A FIRST WIRELESS DEVICE, A REQUEST FOR A SECOND WIRELESS DEVICE TO STORE FIRST INFORMATION, WHEREIN THE REQUEST INCLUDES THE FIRST INFORMATION
1704
RECEIVE AND DECODE A RESPONSE TO DETERMINE WHETHER THE SECOND WIRELESS DEVICE WILL STORE THE FIRST INFORMATION
1706
GENERATE A HEADER, THE HEADER GENERATED WITHOUT THE FIRST INFORMATION THEREIN IF THE SECOND WIRELESS DEVICE WILL STORE THE FIRST INFORMATION
1708
OUTPUT THE REQUEST AND THE HEADER FOR TRANSMISSION TO THE SECOND WIRELESS DEVICE

Figure 17A

REQUEST CIRCUIT
1755
RESPONSE CIRCUIT
1760
HEADER GENERATION CIRCUIT
1765
TRANSMISSION CIRCUIT
1770

Figure 17B

1800
1802
RECEIVE AND DECODE, BY A FIRST WIRELESS DEVICE, A REQUEST FROM A SECOND WIRELESS DEVICE TO IDENTIFY A REQUEST TO STORE FIRST INFORMATION, WHEREIN THE REQUEST INCLUDES THE FIRST INFORMATION
1806
GENERATE A RESPONSE, THE RESPONSE INDICATING WHETHER THE FIRST WIRELESS DEVICE WILL STORE THE FIRST INFORMATION
1808
OUTPUT THE RESPONSE FOR TRANSMISSION TO THE SECOND WIRELESS DEVICE
1810
STORE FIRST INFORMATION AS FIRST STORED INFORMATION
1812
RECEIVE AND DECODE, BY THE FIRST WIRELESS DEVICE, A FIRST HEADER FROM THE SECOND WIRELESS DEVICE TO DETERMINE THAT THE FIRST HEADER DOES NOT INCLUDE HEADER INFORMATION CORRESPONDING TO THE FIRST INFORMATION
1816
PROCESS THE FIRST HEADER BASED ON THE FIRST STORED INFORMATION

**Figure 18A**

REQUEST PROCESSING CIRCUIT
1855
RESPONSE GENERATION CIRCUIT
1860
STORAGE CIRCUIT
1875
RESPONSE TRANSMISSION CIRCUIT
1870
HEADER PROCESSING CIRCUIT
1885
HEADER DECODING CIRCUIT
1880

Figure 18B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013097654 A
- US 61514365 A